(19) Europäisches Patentamt European Patent Office Office européen des brevets

(11) **EP 4 501 977 A1**

(12) **EUROPEAN PATENT APPLICATION**
published in accordance with Art. 153(4) EPC

(43) Date of publication:
**05.02.2025 Bulletin 2025/06**

(21) Application number: **23780503.1**

(22) Date of filing: **28.03.2023**

(51) International Patent Classification (IPC):
**C08F 20/06** (2006.01)   **C08J 3/12** (2006.01)
**C08J 3/24** (2006.01)

(52) Cooperative Patent Classification (CPC):
**B29B 9/12; B29B 7/483; B29B 7/726; B29B 7/826;
B29B 9/06; C08F 20/06; C08J 3/12; C08J 3/24;**
B29C 48/03; B29C 48/402; B29C 48/57;
B29K 2105/0002; B29K 2105/0061

(86) International application number:
**PCT/JP2023/012467**

(87) International publication number:
**WO 2023/190494 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022   JP 2022056292
04.08.2022   JP 2022124526**

(71) Applicant: **Nippon Shokubai Co., Ltd.
Osaka-shi, Osaka 541-0043 (JP)**

(72) Inventors:
• **NODA, Atsuhiro
Himeji-shi, Hyogo 671-1282 (JP)**
• **YORINO, Tsuyoshi
Osaka-shi, Osaka 541-0043 (JP)**

• **ADACHI, Yoshifumi
Himeji-shi, Hyogo 671-1282 (JP)**
• **SATO, Mai
Himeji-shi, Hyogo 671-1282 (JP)**
• **WAKABAYASHI, Ryota
Himeji-shi, Hyogo 671-1282 (JP)**
• **FUJITA, Keisuke
Himeji-shi, Hyogo 671-1282 (JP)**
• **UEDA, Junya
Himeji-shi, Hyogo 671-1282 (JP)**
• **KANEKO, Jumpei
Himeji-shi, Hyogo 671-1282 (JP)**

(74) Representative: **Bradley, Josephine Mary et al
Kilburn & Strode LLP
Lacon London
84 Theobalds Road
London WC1X 8NL (GB)**

(54) **METHOD FOR PRODUCING WATER-ABSORBING RESIN POWDER**

(57)   Provided is a method for producing a water-absorbing resin powder excellent in water absorption speed. The method for producing a water-absorbing resin powder includes a polymerization step of polymerizing an aqueous monomer solution to obtain a crosslinked hydrogel polymer and a gel-crushing step of crushing the crosslinked hydrogel polymer after the polymerization step using a gel-crushing device to obtain a crosslinked particulate hydrogel polymer, in which the gel-crushing device includes an input port, a discharge port, and a main body incorporating a plurality of rotation axes each including a crusher, and in the gel-crushing step, the crosslinked hydrogel polymer is continuously put into the input port and the crosslinked particulate hydrogel polymer is continuously taken out from the discharge port, the crosslinked hydrogel polymer to be put into the input port has a rate of polymerization of 90 mass% or more, a gel-crushing coefficient is 0.020 J/g·sec or more and 3.0 J/g·sec or less, and the crosslinked particulate hydrogel polymer discharged from the discharge port has a mass average particle diameter of 500 $\mu$m or less as converted to a solid content.

FIG.1

200

214 206 204 216 218 212 208

210

(A)

(L)

**Description**

**TECHNICAL FIELD**

The present invention relates to a method for producing a water-absorbing resin powder.

**BACKGROUND ART**

Water-absorbing resins (super absorbent polymers/SAPs) are a water swellable and water insoluble polymer gelling agent, and are widely used in, for example, absorbent articles such as disposable diapers and sanitary napkins, agricultural or horticultural humectants, and industrial water sealants in various fields.

Various monomers as raw materials and hydrophilic polymers are used for the water-absorbing resins, and polyacrylic acid (salt)-based water-absorbing resins using acrylic acid and/or its salt as a monomer are industrially produced in the largest amount from the viewpoint of water absorption performance.

The water-absorbing resins have been required to have various functions (enhanced physical properties) as disposable diapers, which are one of the main applications, have advanced in performance. Specifically, the water-absorbing resins are required to have, in addition to basic physical properties such as absorption capacity without pressure and absorption capacity under load, a variety of physical properties such as gel strength, a water soluble component, a moisture content, water absorption speed, liquid permeability, particle size distribution, urine resistance, an antibacterial property, damage resistance, powder fluidity, a deodorant property, coloring resistance, low dustiness, and low monomer residue. In applications for hygiene products such as disposable diapers, further improvement in water absorption speed is particularly desired as the products become thinner.

A typical commercial method for producing the powdery or particulate water-absorbing resin includes a polymerization step, a gel-crushing (pulverizing ) step performed after or simultaneously with polymerization, a drying step of a pulverized gel, a pulverizing step of a dried product, a classification step of a pulverized product, a recycling step of a fine powder generated by pulverization and classification, and a surface crosslinking step of a water-absorbing resin powder after the classification.

The methods for producing a water-absorbing resin that have been proposed include a production method in which a polymerization step and a gel-crushing step are simultaneously performed using a polymerization apparatus having a crushing mechanism. In this production method, a polymerization reaction of a liquid monomer is progressed and at the same time, a hydrogel generated is crushed, and the pulverized hydrogel is discharged from the polymerization apparatus. Specific examples of this production method include methods in which a batch kneader or a continuous kneader is used that are described in Patent Literature 1 to 3.

However, the size of gel particles obtained with these apparatuses is about several mm to several cm. In the recent situation where further improvement in water absorption speed is required, such gel-crushing is insufficient, and thus an additional gel-crushing device has been needed. Patent Literature 4 proposes a method in which a batch kneader or a continuous kneader is used for wet-crushing to a size smaller than the gel particle size corresponding to the product particle diameter of a water-absorbing resin, but this method is impractical because the apparatus size is excessively large.

Furthermore, in the polymerization step, a highly adhesive hydrogel is crushed with a monomer polymerizing, and thus the hydrogel is likely to adhere to the component inside the apparatus, and in addition, the hydrogel is fixed by the polymerization proceeding in the adhering state, so that component breakage is caused or time is required for cleaning in maintenance.

Citation List

Patent Literature

Patent Literature 1: JP 57-34101 A
Patent Literature 2: JP 60-55002 A
Patent Literature 3: WO 2001/038402 A
Patent Literature 4: JP H05-112654 A

**SUMMARY OF INVENTION**

In order to obtain a water-absorbing resin excellent in water absorption speed, which is particularly required recently, a hydrogel needs to be crushed in a gel-crushing step to a particle diameter smaller than that in the related art, but a hydrogel having a desired particle diameter cannot be obtained by so-called kneader polymerization in which the conventional polymerization step and gel-crushing step are simultaneously performed using a kneader having a plurality of axes.

Therefore, an object of the present invention is to provide a water-absorbing resin excellent in water absorption speed. Another object of the present invention is to reduce monomer residue.

In the prior art, a crosslinked particulate hydrogel polymer (hereinafter, also referred to as "particulate hydrogel") is obtained by using an extruder (meat chopper) provided with a porous plate (hereinafter, also referred to as "die") from a crosslinked hydrogel polymer. The present inventors firstly have found that a particulate hydrogel can be continuously obtained by gel-crushing a crosslinked hydrogel polymer using a multiaxial kneader (particularly, a biaxial kneader). Furthermore, the present inventors have found that a water-absorbing resin powder excellent in water absorption speed can be obtained when the crosslinked hydrogel polymer has a rate of polymerization of 90 mass% or more, the gel-crushing coefficient is 0.02 J/g·sec or more and 3 J/g·sec or less, and the crosslinked particulate hydrogel polymer discharged from the multiaxial kneader has a mass average particle diameter of 500 $\mu$m or less as converted to a solid content, and have completed the present invention.

That is, the present invention is a method for producing a water-absorbing resin powder, including a polymerization step of polymerizing an aqueous monomer solution to obtain a crosslinked hydrogel polymer and a gel-crushing step of crushing the crosslinked hydrogel polymer after the polymerization step using a gel-crushing device to obtain a crosslinked particulate hydrogel polymer, in which the gel-crushing device includes an input port, a discharge port, and a main body incorporating a plurality of rotation axes each including a crusher, in the gel-crushing step, the crosslinked hydrogel polymer is continuously put into the input port, and the crosslinked particulate hydrogel polymer is continuously taken out from the discharge port, the crosslinked hydrogel polymer to be put into the input port has a rate of polymerization of 90 mass% or more, a gel-crushing coefficient is 0.02 J/g·sec or more and 3 J/g·sec or less, and the crosslinked particulate hydrogel polymer discharged from the discharge port has a mass average particle diameter of 500 $\mu$m or less as converted to a solid content.

## BRIEF DESCRIPTION OF DRAWINGS

Fig. 1 is a partially cutaway side view illustrating an example of a gel-crushing device used in a production method according to an embodiment of the present invention.

Fig. 2 is an enlarged view of the gel-crushing device in Fig. 1 (a view of the central part of the main body as viewed from above).

Fig. 3 is a view illustrating an example of a specific configuration of a rotation axis of a gel-crushing device used in Examples.

Fig. 4 is a view illustrating an example of a specific configuration of the rotation axis of the gel-crushing device used in Examples.

Fig. 5 is a view illustrating an example of a specific configuration of the rotation axis of the gel-crushing device used in Examples.

Fig. 6 is a view illustrating an example of a specific configuration of the rotation axis of the gel-crushing device used in Examples.

Fig. 7 is a view illustrating an example of a specific configuration of the rotation axis of the gel-crushing device used in Examples.

Fig. 8 is a front view illustrating an example of a disk.

## DESCRIPTION OF EMBODIMENTS

Hereinafter, the present invention will be described in detail, but the scope of the present invention is not limited to these descriptions, and can be appropriately changed from the following examples and implemented as long as the gist of the present invention is not impaired. The present invention is not limited to the following embodiments, and can be variously modified within the scope indicated in the claims. The present invention also encompasses, in its technical scope, other embodiments obtained by appropriately combining the technical means disclosed in the following embodiments.

[1] Definitions of terms

[1-1] "Water-absorbing resin"

The term "water-absorbing resin" in the present invention refers to a water swellable and water insoluble polymer gelling agent that satisfies the following physical properties. That is, the term "water-absorbing resin" refers to a polymer gelling agent having a centrifuge retention capacity (CRC), which is specified in NWSP 241.0.R2(15) as a water swellable property index, of 5 g/g or more and having a water soluble component (Ext), which is specified in NWSP 270.0.R2 (15) as a water insoluble property index, of 50 mass% or less.

[1-2] "Poly(meth)acrylic acid (salt)"

The term "poly(meth)acrylic acid (salt)" in the present invention refers to a (co)polymer of (meth)acrylic acid and/or its salt, and means a crosslinked polymer containing, as a repeating unit, a structure derived from (meth)acrylic acid and/or its salt (hereinafter, also referred to as "(meth)acrylic acid (salt)") as a main component, and containing a structure derived from an internal crosslinking agent as an optional component.
The term "main component" means that the amount of the (meth)acrylic acid (salt) used (contained) is preferably 50 mol% to 100 mol%, more preferably 70 mol% to 100 mol%, still more preferably 90 mol% to 100 molo, and particularly preferably substantially 100 mol%, with respect to the total amount of monomers (excluding a crosslinking agent) used for polymerization.

[1-3] Definitions of evaluation methods

"NWSP" refers to "Non-Woven Standard Procedures-Edition 2015" describing a unified evaluation method for nonwoven fabrics and products thereof jointly issued by European Disposables And Nonwovens Association (EDANA) and Association of the Nonwoven Fabrics Industry (INDA) in the United States and Europe, and indicates a standard measurement method for a water-absorbing resin. In the present invention, unless otherwise specified, physical properties of a water-absorbing resin are measured in accordance with "Non-Woven Standard Procedures-Edition 2015". In the case of an evaluation method not described in NWSP, measurement is performed in accordance with the method under the condition described in Examples.

[1-3-1] "CRC" (NWSP 241.0.R2(15))

"CRC" is an abbreviation for "centrifuge retention capacity", and means a fluid retention capacity without pressure (also referred to also as "fluid retention capacity") of a water-absorbing resin. Specifically, the term "CRC" refers to a fluid retention capacity (unit: g/g) measured after a procedure in which 0.2 g of a water-absorbing resin is put into a nonwoven fabric bag, then immersed in a large excess of a 0.9 mass% aqueous sodium chloride solution for 30 minutes so as to be allowed to freely swell, and then drained in a centrifuge (250 G) for 3 minutes. For a crosslinked hydrogel polymer (hereinafter, also simply referred to as "hydrogel") after polymerization and/or after gel-crushing, the hydrogel is used in an amount of 0.4 g, the measurement time is changed to 24 hours, and solid content correction is carried out, and thus CRC is determined.

[1-3-2] "Moisture Content" (NWSP 230.0.R2(15))

The term "moisture content" means the moisture content specified with the amount lost from drying a water-absorbing resin. Specifically, the term "moisture content" refers to a value (unit: mass%) calculated from the amount lost from drying 4.0 g of a water-absorbing resin at 105°C for 3 hours. In the present invention, a water-absorbing resin after drying is specified with the amount lost from drying 1.0 g of a water-absorbing resin at 180°C for 3 hours, and a hydrogel before drying is calculated from the amount lost from drying 2.0 g of a hydrogel at 180°C for 24 hours.

[1-3-3] "PSD" (NWSP 220.0.R2 (15))

"PSD" is an abbreviation for "particle size distribution", and means particle size distribution of a water-absorbing resin measured by sieve classification. The mass average particle diameter (D50) and the logarithmic standard deviation ($\sigma\zeta$) of particle size distribution are measured with the same method as that described in U.S. Patent No. 7638570. In the present invention, the particle size distribution (PSD) of a particulate hydrogel is specified with the method of wet sieve classification described below. The particle diameter ($\mu$m) of a particulate hydrogel converted to a solid content is specified from the particle diameter ($\mu$m) and the solid content (mass%) of the particulate hydrogel with the calculation method described below.

[1-3-4] "AAP" (NWSP 242.0.R2(15))

"AAP" is an abbreviation for "absorption against pressure", and means a fluid retention capacity under pressure of a water-absorbing resin. Specifically, the term "AAP" refers to a fluid retention capacity (unit: g/g) measured after 0.9 g of a water-absorbing resin is swollen in a large excess of a 0.9 mass% aqueous sodium chloride solution for 1 hour under a load of 2.06 kPa (21 g/cm$^2$, 0.3 psi). In the present description, AAP is defined as a value measured when the load condition is changed to 4.83 kPa (about 49 g/cm$^2$, equivalent to about 0.7 psi).

[1-3-5] "Vortex"

The term "vortex" in the present description refers to an index indicating the water absorption speed of a water-absorbing resin, and means a time (unit: second) required for 2 g of a water-absorbing resin to absorb 50 ml of a 0.9 mass% aqueous sodium chloride solution to a predetermined state.

[1-4] "Gel-crushing"

The term "gel-crushing" in the present description means an operation of reducing the size of a crosslinked hydrogel polymer obtained in a polymerization step (step of, preferably, aqueous solution polymerization or unstirred aqueous solution polymerization (static aqueous solution polymerization), and particularly preferably belt polymerization) and increasing the surface area of the crosslinked hydrogel polymer by applying shear and compressive force in order to facilitate drying of the crosslinked hydrogel polymer.

Note that the form of a hydrogel obtained may differ depending on the type of the polymerizer. For example, a form of a hydrogel obtained by static polymerization (particularly belt polymerization) has a sheet form or block form. Here, a polymer having a sheet form is planar and has a thickness, and the thickness is preferably 1 mm to 30 cm, and particularly preferably 0.5 to 10 cm. A sheet-formed hydrogel is typically obtained by belt polymerization, drum polymerization, or batch thin film polymerization. The length and the width of a sheet-formed hydrogel are appropriately determined according to the size of the polymerization apparatus to be used. In the case of continuous polymerization (continuous belt polymerization or continuous drum polymerization), a sheet-formed hydrogel having an endless length is obtained. The width of the sheet-formed hydrogel is the width of the belt or drum of the polymerization apparatus, and is preferably 0.1 to 10 m, and more preferably 1 to 5 m. The endless sheet-formed hydrogel may be appropriately cut in the length direction after polymerization and used, and may be appropriately crushed into a several mm to several m-square size after cutting. A block-formed hydrogel is obtained by tank polymerization or the like. This block-formed hydrogel may be crushed into a several mm to several m-square size as appropriate after polymerization. In the case of kneader polymerization, in the polymerization step, polymerization occurs while hydrogel generated by polymerization is coarsely crushed in the same apparatus and thus a particulate hydrogel is obtained. However, hydrogel particles obtained by kneader polymerization, which have a particle diameter of about several cm to several mm, are not pulverized to the level of a particle diameter obtained with the gel-crushing step according to the present invention. Furthermore, it needs an excessive apparatus for crushing hydrogel to a particle diameter obtained in the present invention by the kneader used in kneader polymerization, and thus such crushing is impractical as an industrial production method. Therefore, gel-crushing in such a polymerization step is not included in the concept of "gel-crushing" in the present invention. In the present invention, it is assumed that a polymerization step is completed when the rate of polymerization reaches the range described below. An operation of crushing a particulate hydrogel having a particle diameter of about several cm to several mm obtained with a method such as kneader polymerization to a particle diameter required in the present invention is included in the concept of "gel-crushing" in the present invention.

[1-5] Others

In the present description, the phrase "X to Y" indicating a range means "X or more and Y or less". Unless otherwise specified, the term "ton (t)", which is a unit of mass, means "metric ton", and the term "ppm" means "ppm by mass" or "ppm by weight". Moreover, the terms "mass" and "weight", "parts by mass" and "parts by weight", and "mass%" and "wt%" are treated as synonyms for each other. Furthermore, the term "··· acid (salt)" means "··· acid and/or its salt", and the term "(meth)acrylic" means "acrylic and/or methacrylic".

[2] Method for producing water-absorbing resin powder

The method for producing a water-absorbing resin powder according to the present invention includes a polymerization step, and in addition to the polymerization step, a gel-crushing step. The production method preferably further includes a drying step, a cooling step, a pulverizing step of a dried product, a classification step, a surface crosslinking step, or a sizing step after surface crosslinking. In addition, the production method may include a step for preparing an aqueous monomer solution, a step of adding various additives, a fine powder removing step and a fine powder recycle step (fine powder recycling step), or a filling step. The production method can further include various known steps according to the purpose.

According to the production method of the present invention, an absorbent resin excellent in water absorption speed and having low monomer residue is obtained by gel-crushing a crosslinked hydrogel polymer having a rate of polymerization of 90 mass% or more using a multiaxial kneader (particularly, a biaxial kneader) while controlling a gel-crushing coefficient to 0.020 J/g·sec or more and 3.0 J/g·sec or less, to have a particulate hydrogel having a mass average particle diameter d1 of 500 $\mu$m or less as converted to a solid content.

Hereinafter, each step will be described in detail.

[2-1] Step of preparing aqueous monomer solution

This is an optional step of preparing an aqueous solution containing a monomer as a raw material of the water-absorbing resin, preferably containing an acid group-containing unsaturated monomer as a main component (hereinafter, referred to as "aqueous monomer solution"). A slurry solution of a monomer can be also used as long as the water absorption performance of the obtained water-absorbing resin does not deteriorate, but in this section, an aqueous monomer solution will be described for convenience.

Here, the term "main component" means that the amount of the acid group-containing unsaturated monomer used (contained) is usually 50 molo or more, preferably 70 mol% or more, and more preferably 90 mol% or more (with an upper limit of 100 mol%), with respect to the total amount of monomers (excluding an internal crosslinking agent) subjected to a polymerization reaction of a water-absorbing resin.

(Acid group-containing unsaturated monomer)

The acid group specified in the present invention is not particularly limited, and examples of the acid group include a carboxyl group, a sulfone group, and a phosphate group. Examples of the acid group-containing unsaturated monomer include (meth)acrylic acid, (anhydride) maleic acid, itaconic acid, cinnamic acid, vinylsulfonic acid, allyltoluenesulfonic acid, vinyltoluenesulfonic acid, styrene sulfonic acid, 2-(meth)acrylamide-2-methylpropanesulfonic acid, 2-(meth)acryloylethanesulfonic acid, 2-(meth)acryloylpropanesulfonic acid, and 2-hydroxyethyl(meth)acryloyl phosphate. From the viewpoint of water absorption performance, (meth)acrylic acid, (anhydrous) maleic acid, itaconic acid, and cinnamic acid are preferable, (meth)acrylic acid is more preferable, and acrylic acid is particularly preferable.

(Monomer other than acid group-containing unsaturated monomer)

The monomer other than the acid group-containing unsaturated monomer may be any compound that can be polymerized into a water-absorbing resin. Examples of such a monomer include amide group-containing unsaturated monomers such as (meth)acrylamide, N-ethyl (meth)acrylamide, and N,N-dimethyl (meth)acrylamide; amino group-containing unsaturated monomers such as N,N-dimethylaminoethyl (meth)acrylate, N,N-dimethylaminopropyl (meth)acrylate, and N,N-dimethylaminopropyl (meth)acrylamide ; mercapto group-containing unsaturated monomers; phenolic hydroxyl group-containing unsaturated monomers; and lactam group-containing unsaturated monomers such as N-vinylpyrrolidone.

(Neutralized salt)

In the present invention, a neutralized salt can be used that is obtained by neutralizing some or all of the acid groups included in the acid group-containing unsaturated monomer. In this case, the salt of the acid group-containing unsaturated monomer is preferably a salt with a monovalent cation, more preferably at least one selected from an alkali metal salt, an ammonium salt, and an amine salt, still more preferably an alkali metal salt, still even more preferably at least one selected from a sodium salt, a lithium salt, and a potassium salt, and particularly preferably a sodium salt.

(Neutralizing agent)

The neutralizing agent used to neutralize the acid group-containing unsaturated monomer is not particularly limited, and an inorganic salt such as sodium carbonate or ammonium carbonate, or a basic substance such as sodium hydroxide, potassium hydroxide, or an amine-based organic compound having an amino group or an imino group is appropriately selected and used. As the neutralizing agent, two or more kinds of salts or basic substances may be used in combination. The term "monomer" in the present invention represents a concept including a neutralized salt unless otherwise specified.

(Rate of neutralization)

The number of moles of the neutralized salt with respect to the total number of moles of the acid group-containing unsaturated monomer and its neutralized salt (hereinafter, referred to as "rate of neutralization") is preferably 40 mol% or more, more preferably 40 mol% to 80 mol%, still more preferably 45 mol% to 78 molo, and particularly preferably 50 mol% to 75 mol%, from the viewpoint of water absorption performance.

Examples of the method for adjusting the rate of neutralization include a method of mixing an acid group-containing unsaturated monomer and its neutralized salt, a method of adding known neutralizing agent to an acid group-containing unsaturated monomer, and a method of using partially neutralized salt of an acid group-containing unsaturated monomer adjusted to a predetermined rate of neutralization in advance (that is, a mixture of an acid group-containing unsaturated monomer and its neutralized salt). These methods may be combined.

The rate of neutralization may be adjusted before the start of the polymerization reaction of the acid group-containing unsaturated monomer or during the polymerization reaction of the acid group-containing unsaturated monomer, or the rate of neutralization may be adjusted in the crosslinked hydrogel polymer obtained after the completion of the polymerization reaction of the acid group-containing unsaturated monomer. The rate of neutralization may be adjusted in any one stage selected from the stage before the start of the polymerization reaction, the stage during the polymerization reaction, and the stage after the completion of the polymerization reaction, or may be adjusted in a plurality of stages. In use for absorbent articles and the like, such as disposable diapers, that may directly contact with the human body, the rate of neutralization is to be adjusted preferably before the start of the polymerization reaction and/or during the polymerization reaction, and more preferably before the start of the polymerization reaction.

(Internal crosslinking agent)

In the method for producing a water-absorbing resin powder, an internal crosslinking agent is preferably used. The water absorption performance, the gel strength after water absorption, and the like of the water-absorbing resin obtained are adjusted with the internal crosslinking agent.

The internal crosslinking agent is to have two or more unsaturated bonds or reactive functional groups in total in one molecule. Examples of the internal crosslinking agent having a plurality of polymerizable unsaturated groups (copolymerizable with a monomer) in the molecule include N,N-methylenebis(meth)acrylamide, (poly) ethylene glycol di(meth)acrylate, (poly)propylene glycol di(meth)acrylate, trimethylolpropane tri(meth)acrylate, glycerin (meth)acrylate, glycerin acrylate methacrylate, ethylene oxide-modified trimethylolpropane tri(meth)acrylate, pentaerythritol hexa(meth) acrylate, triallyl cyanurate, triallyl isocyanurate, and triallyl phosphate. Examples of the internal crosslinking agent having a plurality of reactive functional groups (capable of reacting with a functional group of a monomer (for example, a carboxy group)) in the molecule include triallylamine, polyallyloxyalkanes, (poly)ethylene glycol diglycidyl ether, glycerol diglycidyl ether, ethylene glycol, polyethylene glycol, propylene glycol, glycerin, 1,4-butanediol, pentaerythritol, ethylenediamine, ethylene carbonate, propylene carbonate, and polyethyleneimine (here, the cyclic carbonates such as ethylene carbonate are a crosslinking agent that reacts with a carboxyl group to further generate a functional group OH). Examples of the internal crosslinking agent having a polymerizable unsaturated group and a reactive functional group in the molecule include glycidyl (meth)acrylate. Two or more of these may be used in combination.

Among these internal crosslinking agents, compounds having a plurality of polymerizable unsaturated groups in the molecule are preferable, compounds having a (poly)alkylene structural unit in the molecule are more preferable, and compounds having a polyethylene glycol structural unit are still more preferable, from the viewpoint of an effect of the present invention.

The amount of the internal crosslinking agent used is appropriately set according to, for example, the kinds of the monomer and the internal crosslinking agent. From the viewpoint of the gel strength of the resulting water-absorbing resin, the amount is preferably 0.001 mol% or more, more preferably 0.005 mol% or more, and still more preferably 0.01 mol% or more, with respect to the monomer amount. The amount is preferably 5 mol% or less and more preferably 2 mol% or less, from the viewpoint of improving the water absorption performance of the water-absorbing resin. The internal crosslinking agent may be not used under a polymerization condition of an effective self-crosslinking reaction of the monomer.

(Polymerization inhibitor)

The monomer used for polymerization preferably contains a small amount of polymerization inhibitor from the viewpoint of polymerization stability. A preferred polymerization inhibitor is p-methoxyphenol. The amount of the polymerization inhibitor contained in the monomer (particularly, acrylic acid and its salt) is usually 1 ppm to 250 ppm, preferably 10 ppm to 160 ppm, and more preferably 20 ppm to 80 ppm.

(Other substances)

In the production method according to the present invention, substances exemplified below (hereinafter, referred to as "other substances") can also be added to the aqueous monomer solution as long as an object of the present invention is achieved.

Specific examples of other substances include chain transfer agents such as thiols, thiolic acids, secondary alcohols, amines, and hypophosphites, foaming agents such as carbonates, bicarbonates, and azo compounds, chelating agents such as ethylenediaminetetra(methylenephosphinic acid) and its metal salts, ethylenediaminetetraacetic acid and its metal salts, and diethylenetriaminepentaacetic acid and its metal salts, and hydrophilic polymers such as polyacrylic acid (salts) and crosslinked polymers thereof (such as water-absorbing resin fine powder to be recycled), starch, cellulose, starch-cellulose derivatives, polyvinyl alcohol, and fine powder. Other substances may be used singly or in combination of two or more kinds thereof.

The amount of other substances used is not particularly limited. However, the amount of a fine powder to be recycled is 30 mass% or less with respect to the monomer amount, and the total concentration of other substances other than a fine powder is preferably 10 mass% or less, more preferably 0.001 mass% to 5 mass%, and particularly preferably 0.01 mass% to 1 mass%, with respect to the monomer amount.

(Monomer concentration in monomer composition (aqueous monomer solution))

In the present step, the monomer concentration in the monomer composition (aqueous monomer solution) (= total monomer amount/(total monomer amount + total amount of polymerization solvent (usually being water)) is preferably 10 mass% to 90 mass%, more preferably 20 mass% to 80 mass%, still more preferably 30 mass% to 70 mass%, and particularly preferably 40 mass% to 60 mass% from the viewpoint of the physical properties and the productivity of the water-absorbing resin. Hereinafter, the monomer concentration may be referred to as "concentration of monomers".

(Polymerization initiator)

The polymerization initiator used in the present invention is appropriately selected according to the form of polymerization and the like, and thus is not particularly limited. Examples of the polymerization initiator include thermal decomposition polymerization initiators, photolytic polymerization initiators, combination thereof, and redox polymerization initiators to be used in combination with a reducing agent that promotes decomposition of a polymerization initiator. Specifically, one or more of the polymerization initiators disclosed in U.S. Patent No. 7265190 are used. Note that a peroxide or an azo compound is preferably used, a peroxide is more preferably used, and a persulfate is still more preferably used, from the viewpoint of the handleability of the polymerization initiator and the physical properties of the water-absorbing resin.

The amount of the polymerization initiator used is preferably 0.001 mol% to 1 mol% and more preferably 0.001 mol% to 0.5 mol%, with respect to the monomer amount. In a case where redox polymerization is performed as necessary, the amount of the reducing agent used in combination with the oxidizer is preferably 0.0001 mol% to 0.02 mol% with respect to the monomer amount.

(Amount of dissolved oxygen)

The dissolved oxygen in the aqueous monomer solution before polymerization may be reduced by increasing the temperature or replacing with an inert gas. For example, the dissolved oxygen is reduced to preferably 5 ppm or less, more preferably 3 ppm or less, and particularly preferably 1 ppm or less.

Bubbles (particularly, the above-described inert gas or the like) can be dispersed in the aqueous monomer solution. In this case, foaming polymerization occurs in the polymerization reaction.

[2-2] Polymerization step

This is a step of polymerizing the aqueous monomer solution to obtain a crosslinked hydrogel polymer. This is preferably a step to obtain a crosslinked hydrogel polymer containing poly(meth)acrylic acid (salt) as a main component.

In addition to the above-described method by adding a polymerization initiator to perform a polymerization reaction, a method is available by irradiation with an active energy ray such as a radiation, an electron beam, or an ultraviolet ray. Furthermore, addition of a polymerization initiator and irradiation with an active energy ray may be used in combination.

(Form of polymerization)

Regarding the form of polymerization, the polymerization is batch or continuous aqueous solution polymerization. The polymerization may be belt polymerization or kneader polymerization. Continuous aqueous solution polymerization is more preferable, and both continuous belt polymerization and continuous kneader polymerization are applicable. Regarding specific forms of polymerization, U.S. Patent No. 4893999, U.S. Patent No. 6241928, US 2005/215734 A, and the like disclose continuous belt polymerization, and U.S. Patent No. 6987151, U.S. Patent No. 6710141, and the like disclose continuous kneader polymerization. Using the continuous aqueous solution polymerization described above improves the production efficiency of a water-absorbing resin.

Examples of a preferable form of the continuous aqueous solution polymerization include forms of "high temperature initiation polymerization" and "high concentration polymerization". The term "high temperature initiation polymerization" refers to a form in which polymerization is initiated at a temperature of an aqueous monomer solution of preferably 30°C or higher, more preferably 35°C or higher, still more preferably 40°C or higher, and particularly preferably 50°C or higher (with an upper limit of the boiling point), and the term "high concentration polymerization" refers to a form in which polymerization is performed at a monomer concentration of preferably 30 mass% or more, more preferably 35 mass% or more, still more preferably 40 mass% or more, and particularly preferably 45 mass% or more (with an upper limit of the saturated concentration). These forms of polymerization can also be used in combination.

(Rate of polymerization of hydrogel)

The rate of polymerization of the crosslinked hydrogel polymer obtained in the polymerization step and put into the input port of the gel-crushing device is 90 mass% or more. The rate of polymerization of the crosslinked hydrogel polymer put into the input port of the gel-crushing device is preferably 95 mass% or more, more preferably 98 mass% or more, and particularly preferably 99 mass% or more. In the case of crushing the gel in a state of a low rate of polymerization (that is, a state of a rate of polymerization of less than 90 mass%) (in a case where polymerization and gel-crushing are simultaneously performed as in, for example, kneader polymerization), a large amount of unreacted monomers included in the crushed gel particles polymerize to bond the crushed gel particles together, and thus gel particles having a large particle diameter are generated again. Therefore, in the case of crushing the gel during the polymerization step, the regenerated gel particles having a large particle diameter are to be crushed again, leading to a problem that the energy required for crushing increases and the polymerization apparatus becomes excessively large. In a case where, after the polymerization step, a hydrogel having a low rate of polymerization is crushed and the crushed hydrogel containing a large amount of unreacted monomers is subjected to the drying step, a polymerization reaction proceeds during drying to regenerate hydrogel particles having a large particle diameter from gel particles having a small particle diameter, leading to problems such as a decrease in the water absorption speed of the resulting water-absorbing resin and an increase in the particle diameter of the dried product. The upper limit of the rate of polymerization is not particularly limited, and is ideally 100 mass%. However, a high rate of polymerization requires a long polymerization time and strict polymerization conditions that may lead to deterioration of the productivity and the physical properties. Therefore, the upper limit may be 99.99 mass%, 99.95 mass%, or 99.9 mass%, and usually an upper limit of about 99.8 mass% is sufficient. Typically, the rate of polymerization of the crosslinked hydrogel polymer obtained in the polymerization step is 90 to 99.99 mass%, 95 to 99.99 mass%, 98 to 99.99 mass%, 98 to 99.95 mass%, 98 to 99.9 mass%, or 98 to 99.8 mass%.

[2-3] Chopping step

The chopping step is an optional step of cutting or roughly crushing the crosslinked hydrogel polymer into a size such that the resulting polymer can be put into the gel-crushing device after the polymerization step and before the gel-crushing step. The chopping step is preferably performed particularly in a case where belt polymerization is performed in the polymerization step to obtain a sheet-formed or block-formed hydrogel. Therefore, in one embodiment of the present invention, the crosslinked hydrogel polymer obtained after the polymerization step has a sheet form, and a chopping step of chopping the sheet-formed crosslinked hydrogel polymer before the gel-crushing step is further included. The means for cutting or roughly crushing the hydrogel in the chopping step is not particularly limited, and a rotary cutter, a roller cutter, a guillotine cutter, a cutter mill, a screw extruder (for example, a meat chopper or the like), or the like is used, and these devices are used in combination as necessary. The size of the chopped crosslinked hydrogel polymer is not particularly limited as long as the chopped hydrogel can be put into the gel-crushing device described below, but the size of the chopped hydrogel is preferably 0.8 mm to 3 m, more preferably 1 mm to 2.5 m, and particularly preferably 1 mm to 2 m. The chopping step may be not performed as long as an object of the present invention is achieved.

In the chopping step, water and/or water vapor (preferably, water and water vapor) may be supplied in the same manner as specifically described in the gel-crushing step described later. The supply of water and/or water vapor is performed, for example, by supplying water and water vapor into an apparatus used in the chopping step. The apparatus used in the chopping step may include a plurality of supply ports as a means for supplying water and/or water vapor. Specific means and suitable ranges of a method of adding water vapor, a pressure, a temperature of water and/or water vapor, and a supply amount of water and/or water vapor are the same as those described in the gel-crushing step described later.

[2-4] Gel-crushing step

This is a step of, after the polymerization, crushing and pulverizing the crosslinked hydrogel polymer obtained in the polymerization step to obtain a crosslinked particulate hydrogel polymer. In this step, the particle diameter of the particulate hydrogel is adjusted to a preferred range described below. In order to obtain a particulate hydrogel having a predetermined particle diameter, this step may be performed twice or more.

(Gel-crusher)

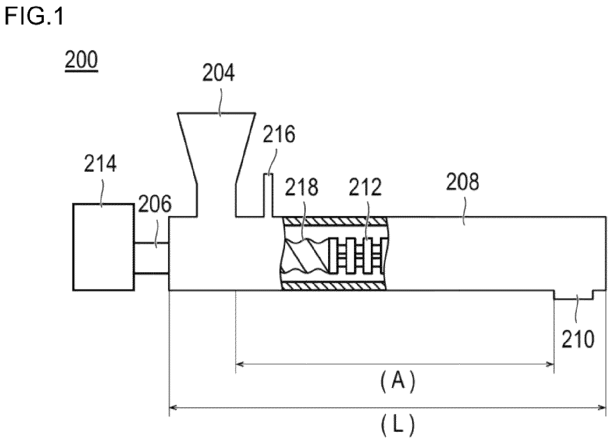

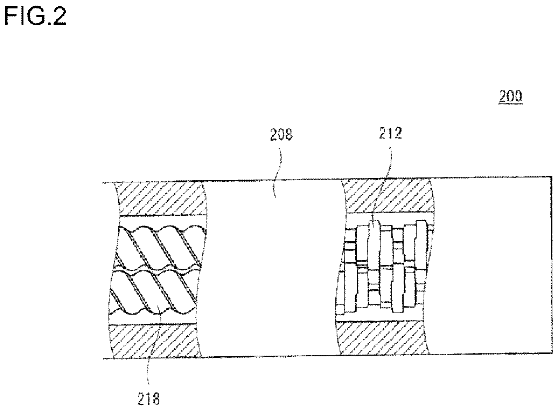

In the production method according to the present invention, in the gel-crushing step after the polymerization step, a gel-crushing device is used that has an input port, a main body incorporating a plurality of rotation axes, and a discharge port as illustrated in Figs. 1 and 2. Each rotation axis includes a crusher. In this gel-crushing device, the crosslinked hydrogel polymer continuously put into the main body from the input port is crushed by the crusher incorporated in the rotation axes, and the resulting crosslinked particulate hydrogel polymer is continuously taken out from the discharge port. In the present invention, the term "main body" means a body portion (reference sign 208 in Fig. 1) in which a plurality of rotation axes and crusher are placed, which is also referred to as a barrel, a trough, a casing, or the like.

The gel-crushing device used in the production method according to the present invention may be set vertically (so that the hydrogel moves in the vertical direction), or may be set laterally or horizontally (so that the hydrogel moves in the lateral direction or the horizontal direction) as long as gel-crushing is continuous. The vertical gel-crushing device and the horizontal gel-crushing device may be inclined at 0° to 90° with respect to the horizontal direction. For example, the horizontal continuous crusher illustrated in Fig. 1 is appropriately inclined as necessary, and the inclination may be downward or upward from the input port to the discharge port (that is, with respect to the moving direction of the hydrogel). The inclination angle is usually 0° to 10°, preferably 0° to 1°, and particularly preferably 0°.

In an extruder (meat chopper) used for gel-crushing in conventional production methods, a hydrogel is substantially crushed in the vicinity of a die placed in an extrusion port, and almost no gel-crushing is performed in a screw portion serving to convey the hydrogel. Meanwhile, in the case of the gel-crushing device (in particular, kneader) used in the production method according to the present invention, the hydrogel put into the gel-crushing device is continuously crushed from the input port to the discharge port to a smaller particle diameter with the crusher incorporated in the rotation axes.

Specifically, in the gel-crushing device, the hydrogel put from the input port is crushed to an intended particle size before being discharged from the discharge port. Therefore, in the gel-crushing device, extrusion from a die is not essential unlike in a conventional extruder (meat chopper), and a particulate hydrogel adjusted to an intended particle size is taken out from the discharge port. In the production method according to the present invention, a water-absorbing resin excellent in water absorption speed is obtained by using the gel-crushing device.

The gel-crushing device preferably includes a heating means and/or a heat-retaining means from the viewpoint of continuously performing gel-crushing. The heating means and/or the heat-retaining means is not particularly limited, but from the viewpoint of preventing adhesion and aggregation of the hydrogel and the particulate hydrogel, a heating means is preferable that uses direct heat transfer by convection heat transfer and/or indirect heat transfer by heat conduction from a heating surface (contact surface with the hydrogel, heat source portion) of the gel-crushing device heated with a heat medium. More preferable heating means include ventilation heating by direct heat transfer and outer wall heating by indirect heat transfer.

The heating means and/or the heat-retaining means, and more preferably the heating means is preferably provided on the outer surface of the main body, from the viewpoint of reducing damage to the hydrogel. Examples of the heat-retaining means include a means in which a part or the whole of the outer surface of the main body (preferably 500 or more, more preferably 800 or more, and particularly preferably the whole of the outer surface (area) of the main body) is covered with a heat insulating material. Examples of the heating means include an electric trace, a steam trace, and a jacket heated with a heat medium that are placed so as to cover a part or the whole of the outer surface of the main body (preferably 500 or more, more preferably 800 or more, and particularly preferably the whole of the outer surface (area) of the main body). The particle diameter of the particulate hydrogel required in the present invention is considerably smaller than that in the related art. Therefore, the fluctuation in the adhesive property and the fluidity of the hydrogel particles due to the temperature change are greater than those assumed in the conventional technique. As a result, since the energy required for crushing the hydrogel and the aggregation between the crushed gel particles can greatly vary depending on the temperature, there may be a temperature range suitable for continuously crushing the crosslinked hydrogel polymer as described later. If the gel-crushing device includes the heating means and/or the heat-retaining means, the gel-crushing step can be performed in a further preferable temperature range. Furthermore, the quality of gel-crushing can be prevented from deterioration caused by the influence of a temperature difference between seasons or between day and night. In addition, the gel-crushing device can be smoothly brought to a stable operation even at the time of start-up.

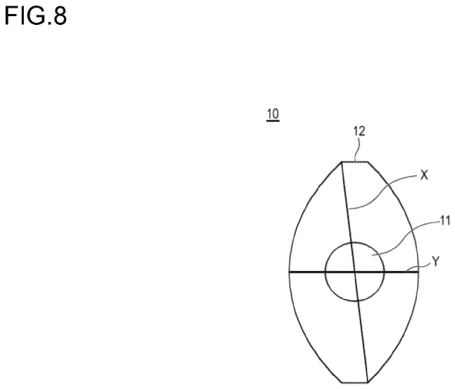

The kind of the crusher included in each rotation axis is not particularly limited as long as an effect of the present invention can be obtained. Examples of the crusher having a shearing action on the hydrogel include disks having various shapes. Disks are referred to as a chip, a paddle, an element, a kneading, a rotor, or the like in some cases. The shape of the disk is not particularly limited, and is appropriately selected from circular plate shapes, approximately elliptical shapes, approximately triangular shapes, and the like, but is preferably a shape having a major axis diameter X and a minor axis diameter Y, and more preferably an approximately elliptical shape. The approximately elliptical shape includes, in addition to the elliptical shape, a barrel shape, a track shape, and a shape in which a part thereof is deformed (for example, a shape as illustrated in Fig. 8 described later). The major axis diameter X and the minor axis diameter Y will be described later. Disks having different shapes can also be used in combination, and the arrangement thereof is appropriately adjusted from the viewpoint of the intended particle diameter of the particulate hydrogel and the energy required for crushing. In addition, an arm, a vane, a blade, a cut disk (CD), or the like may be used in combination as a crusher.

For example, in a case where each rotation axis incorporates a disk as a crusher, in particular a disk having a circular plate shape or a (approximately) elliptical shape, the ratio of the effective length L (mm) inside the main body to the disk's maximum diameter D (mm, in the case of using a plurality of disks having different diameters or major axis diameters, the diameter or the major axis diameters of the largest disk) is defined as L/D. L/D is preferably 5 or more, more preferably 6 or more, and still more preferably 7 or more. When L/D is the above-described lower limit or more, the pressure applied to the hydrogel during gel-crushing is distributed throughout the main body (barrel), and the maximum pressure on the hydrogel is reduced, which is preferable. In addition, L/D is preferably 20 or less, and more preferably 15 or less. When L/D is the above-described upper limit or less, an excessively large crusher does not need, and an increase in device cost can be suppressed, which is preferable. L/D is preferably 5 or more and 20 or less, more preferably 6 or more and 15 or less, and still more preferably 7 or more and 15 or less. The effective length L means the length (entire length) of the main body (barrel) portion in the axial direction from the input port to the discharge port, as illustrated in Fig. 1.

The effective length L inside the main body is, for example, 200 mm to 8000 mm, and may be 400 to 7000 mm. The maximum diameter D (in the case of using a plurality of disks having different diameters or major axis diameters, the diameter and major axis diameter of the largest disk) of the disk is, for example, 10 to 1000 mm, and may be 20 to 800 mm.

The distance (clearance) between the disk and the main body (barrel) may depend on the location. When the minimum clearance C is defined as the shortest distance between the outer periphery of the disk and the inner wall of the main body (barrel), the minimum clearance C is preferably 200 or less, more preferably 150 or less, still more preferably 10% or less, and particularly preferably 5% or less of the maximum diameter of the disk, D. If the minimum clearance C is the above-described upper limit or less, the shearing force between the barrel and the disk is strong during gel-crushing, resulting in favorable gel-crushing efficiency. The minimum clearance C is preferably 0.20 or more, more preferably 0.50 or more, and still more preferably 1% or more of the maximum diameter of the disk, D. If the minimum clearance C is the above-described lower limit or more, contact between the disk and the inner wall of the main body (barrel) is suppressed, resulting in suppression of contamination with a metal foreign substance due to wear. In a preferred embodiment of the present invention, the minimum clearance C is 0.2 to 200 of the maximum diameter of the disk, D.

As described below, in the gel-crushing device, the hydrogel is crushed to a predetermined particle size by rotation of a plurality of rotation axes including a crusher. The rotation speeds of the plurality of rotation axes may be constant or not constant, and is appropriately set according to the apparatus. The rotation speed is preferably in the range of 1 rpm to 1000 rpm, more preferably 3 rpm to 500 rpm, and still more preferably 5 rpm to 300 rpm. In a case where the rotation axes have different rotation speeds, the ratio of the rotation speed of one rotation axis to the rotation speed of the other rotation axis is usually in the range of 1 to 10, and preferably in the range of 1 to 2. Preferably, the rotation axes are parallel to each other.

In a case where the plurality of rotation axes incorporate a disk as a crusher, the peripheral speed (V) of the disk defined by the following (Formula 1) may be constant or not constant, and is appropriately set according to the apparatus. The peripheral speed is preferably 0.05 m/s to 5 m/s, more preferably 0.1 m/s to 5 m/s, still more preferably 0.15 m/s to 3 m/s, and particularly preferably 0.2 m/s to 2 m/s. The peripheral speed higher than the above range makes the shearing force applied to the hydrogel excessive and causes deterioration of the physical properties and excessive compaction (aggregation) in the hydrogel particles after gel-crushing, and therefore such a peripheral speed is not preferable. A peripheral speed lower than the above range reduces the treatment amount per unit time in the gel-crushing step, and therefore such a peripheral speed is not preferable. In a case where the rotation axes include disks having different peripheral speeds, the ratio of the peripheral speed in one rotation axis to the peripheral speed in the other rotation axis is usually in the range of 1 to 10, and preferably in the range of 1 to 2.

```
Peripheral speed (V) (m/s) = πD × n/60 ···
(Formula 1)
```

In (Formula 1), V represents the peripheral speed of a disk (unit: m/s), D represents the maximum diameter of the disk (unit: m), and n represents the rotation speed of the disk per unit time (unit: rpm).

The rotation directions of the plurality of rotation axes may be the same so that the rotation axes rotate in the same direction, or may be different so that the rotation axes rotate in opposite directions. In a gel-crushing device with the same rotation direction, a self-cleaning property can be expected, and in a gel-crushing device with different rotation directions, a strong shearing force can be expected. The rotation direction of each rotation axis is appropriately selected according to the combination with the arrangement of the crusher (disk pattern) described below.

The gel-crushing device preferably has a function of supplying water and/or water vapor to the inside of the main body. By crushing a gel while supplying water and/or water vapor (preferably water and water vapor), a water-absorbing resin powder can be obtained that is further excellent in water absorption speed. In addition, immediately after the start of gel-crushing, the discharged crosslinked particulate hydrogel polymer contains a relatively large amount of coarse crosslinked particulate hydrogel polymer having a particle size of 10 mm or more, but by performing gel-crushing while supplying water and/or water vapor (preferably, water and water vapor), such coarse crosslinked particulate hydrogel polymer having a particle size of 10 mm or more can be reduced in a short time, and the amount of coarse gel mixed in the crosslinked particulate hydrogel polymer obtained even in a steady state can be reduced. Therefore, according to one embodiment of the present invention, water and/or water vapor is supplied inside the main body in the gel-crushing step. In another preferred embodiment, water and water vapor is supplied inside the main body in the gel-crushing step. The gel-crushing device may include a plurality of supply ports of water and/or water vapor as a means for supplying water and/or water vapor. The supply port of water and/or water vapor may be placed at any position, and is preferably placed on the side of the input port of the hydrogel. That is, water and/or water vapor is supplied from the vicinity of the input port of the hydrogel. Water and water vapor may be supplied from different supply ports .

The way of adding water vapor is not particularly limited, and for example, a gas such as air, dry air, or nitrogen may be mixed with water vapor and added as a mixed gas. The pressure of the water vapor to be added is not particularly limited, and is preferably 0.2 to 0.8 MPa, and more preferably 0.3 to 0.7 MPa. The temperature of the water and/or the water vapor (including the mixed gas) is not particularly limited, and is preferably 50°C or higher, more preferably 60°C or higher, still more preferably 70°C or higher, and particularly preferably 80°C or higher. The temperature is preferably 200°C or lower, more preferably 170°C or lower, still more preferably 150°C or lower, still even more preferably 120°C or lower, and particularly preferably 100°C or lower, from the viewpoint of suppressing excessive temperature rise and hydrogel drying. In a preferred embodiment, the water and/or the water vapor supplied to the inside of the main body has a temperature of 50 to 200°C, 50 to 170°C, 50 to 150°C, 50 to 120°C, 60 to 120°C, 70 to 120°C, and 80 to 120°C. It is also possible to adjust the temperature of the hydrogel and the particulate hydrogel in the gel-crushing device according to the temperature and the supply amount of the water and/or the water vapor (including the mixed gas) used. In this case, the water vapor and/or the mixed gas acts as a heat medium for direct heat transfer to heat or keep the hydrogel and the particulate hydrogel inside the main body to a predetermined temperature. In the water and/or the water vapor (including the mixed gas) to be added, additives may be blended such as a gel-fluidizing agent, a crosslinking agent, an oxidizer, a reducing agent, and a polymerization initiator described below.

The amount of the water and/or the water vapor supplied is preferably 0.1 mass% to 50 mass%, more preferably 0.5 mass% to 40 mass%, and still more preferably 1 mass% to 30 mass% with respect to the mass of the hydrogel converted to a solid content.

The gel-crushing device used in the production method according to the present invention preferably includes the heating means and/or the heat-retaining means on the outer surface of the main body, and a liquid heat medium such as hot water or oil may be introduced into a jacket or the like placed on the outer surface of the main body, or a heated gas (hot gas) may be introduced as a heat medium. These heat media act as heat media for indirect heat transfer. The temperature of the heat medium is preferably 50°C or higher, more preferably 60°C or higher, still more preferably 70°C or higher, and particularly preferably 80°C or higher, from the viewpoint of heating efficiency and/or heat-retaining efficiency of indirect heat transfer. Meanwhile, from the viewpoint of suppressing excessive temperature rise and hydrogel drying, the temperature of the heat medium is preferably 200°C or lower, more preferably 170°C or lower, still more preferably 150°C or lower, still even more preferably 130°C or lower, and particularly preferably 110°C or lower. Particularly preferred heat media are hot water and water vapor. The temperature of the heat medium may be constant or appropriately changed during the gel-crushing step.

More preferably, the temperature of the inside (inner surface) of the main body is heated to 50°C or higher, more preferably 60°C or higher, still more preferably 70°C or higher, and still even more preferably 80°C or higher before the hydrogel is put into the gel-crushing device. This heating reduces adhesion of the hydrogel to the inner surface of the main body. In addition, this heating further improves the water absorption speed of the resulting water-absorbing resin powder. That is, in the production method according to the present invention, the inner surface of the main body is preferably heated to the above-described temperature or higher before the input of the hydrogel and/or at the start of gel-crushing. More preferably, the inner surface of the main body, the plurality of rotation axes, and the outer surface of the crusher included in each rotation axis are preferably heated to the above-described temperature or higher. Meanwhile, from the viewpoint of suppressing excessive temperature rise and hydrogel drying, the heating temperature of the inside (inner surface) of the main body is preferably 200°C or lower, more preferably 170°C or lower, still more preferably 150°C or lower, still even more preferably 130°C or lower, and particularly preferably 110°C or lower before the hydrogel is put into the gel-crushing device. For example, the temperature of the inside (inner surface) of the main body can be adjusted to a desired range by circulating and keep-circulating a heat medium inside the jacket provided in the main body. The temperature of the inside (inner surface) of the main body is preferably kept in the above range in the gel-crushing step from the viewpoint of keeping the gel temperature in the gel-crushing step. In a preferred embodiment, before the hydrogel is put into the gel-crushing device, the temperature of the inside (inner surface) of the main body is heated from 50 to 200°C, from 50 to 170°C, from 50 to 150°C, from 50 to 130°C, from 50 to 110°C, from 60 to 110°C, from 70 to 110°C, and from 80 to 110°C.

The temperature at which the crosslinked hydrogel polymer is continuously crushed is preferably 50°C or higher, more preferably 60°C or higher, still more preferably 70°C or higher, and still even more preferably 80°C or higher because gel-crushing is continuously performed favorably.

The upper limit of the temperature at which the crosslinked hydrogel polymer is continuously crushed is not particularly limited, but from the viewpoint of suppressing excessive temperature rise and hydrogel drying, the upper limit is preferably 200°C or lower, more preferably 170°C or lower, still more preferably 150°C or lower, still even more preferably 130°C or lower, and particularly preferably 110°C or lower.

Here, for example, the phrase "the crosslinked hydrogel polymer is continuously crushed at 50°C or higher" means that the crosslinked hydrogel polymer is continuously crushed while the temperature of the crosslinked hydrogel polymer is maintained at 50°C or higher in the section shown by (A) in Fig. 1, that is, the section from the input port to the discharge port exclusive. In other words, the phrase "the crosslinked hydrogel polymer is continuously crushed by the crusher at 50°C or higher" refers to the state "the crosslinked hydrogel polymer in a state of being maintained at 50°C or higher is continuously crushed by the crusher". For example, if the temperature T1 of the crosslinked hydrogel polymer to be put into the input port of the gel-crushing device is 50°C or higher and the temperature of the heat medium in the jacket placed outside the main body of the gel-crushing device is 50°C or higher, the temperature of the crosslinked hydrogel polymer can be maintained at 50°C or higher in the section (A) in Fig. 1, and thus the crosslinked hydrogel polymer can be continuously crushed at 50°C or higher. The above definition also includes, for example, a case in which although the temperature T1 of the crosslinked hydrogel polymer to be put into the input port of the gel-crushing device is 50°C or lower, the temperature of the crosslinked hydrogel polymer is rapidly raised, for example, by supplying high-temperature water and/or water vapor at the input port portion or by setting the temperature of the heat medium in the jacket of the main body of the gel-crushing device to a high temperature and thus the crosslinked hydrogel polymer is continuously crushed at 50°C or higher in the portion (A).

In the case of a large gel-crushing device, a heat medium is preferably circulated as a heating means and/or a heat-retaining means also inside the plurality of rotation axes. This circulation can shorten the time for raising the temperature of the inside of the main body at the time of starting the gel-crushing device.

The porosity V of the gel-crushing device calculated by the following (Formula 2) (hereinafter, also simply referred to as porosity V) is preferably 400 or more, and more preferably 450 or more. The porosity V is preferably 80% or less, more preferably 700 or less, still more preferably 650 or less, and particularly preferably 60% or less. The porosity V of the gel-crushing device is preferably 400 or more and 800 or less, more preferably 400 or more and 700 or less, still more preferably 450 or more and 650 or less, and particularly preferably 450 or more and 600 or less.

$$\mathtt{Porosity\ V\ =\ [(A-B)/A]*100\ (Formula\ 2)}$$

(Here, A is an internal volume ($m^3$) of a main body portion (that is, a portion indicated by a reference sign (A) in Fig. 1) excluding a portion corresponding to the input port and a portion corresponding to the discharge port from the main body (barrel) in the length direction, and B is a total volume ($m^3$) of a plurality of rotation axes, screws, and the crusher existing in the portion indicated by the reference sign (A) in Fig. 1.)

When the porosity V is the above-described upper limit or less, the hydrogel is uniformly crushed, and the ratio of coarse particles decreases. In addition, when the porosity V is the above-described lower limit or more, application of excessive pressure to the hydrogel and deterioration of productivity are less likely to occur.

In the gel-crushing device used in the production method according to the present invention, using no die (die plate) is the most preferable, but a die may be placed at the discharge port as long as an effect of the present invention can be obtained. In the case of using a die, the die preferably has an aperture ratio of 250 or more, more preferably 500 or more, still more preferably 600 or more, still even more preferably 700 or more, and particularly preferably 80% or more. The upper limit of the aperture ratio is not particularly limited. The term "aperture ratio of 100%" is synonymous with the term "using no die". The die (die plate) is a plate having (a plurality of) through holes for discharge of the material inside the main body, and is placed in the vicinity of the discharge port of the crusher. The aperture ratio refers to the ratio of the area of the total through holes in planar view to the area of the die in planar view. As the aperture ratio is larger, the material inside the main body is less likely to be dammed and more likely to be charged, resulting in a more remarkable effect of the present invention. In addition, as a mechanism for adjusting the size of the discharge port 210 in Fig. 1, a plate having no through hole may be installed to appropriately adjust the size of the discharge port.

Figs. 1 and 2 illustrate an example of a gel-crushing device 200 used in the production method according to the present invention. Fig. 1 is a partially cutaway side view of the gel-crushing device 200, and Fig. 2 is an enlarged view of the gel-crushing device 200 (a view of the central part of the main body as viewed from above). Hereinafter, a basic configuration and a method of use of the gel-crushing device 200 will be described with reference to Figs. 1 and 2.

As illustrated in the drawing, the gel-crushing device 200 includes an input port 204, a main body 208, two rotation axes 206, a discharge port 210, a drive device 214, and a gas supply port 216. The main body 208 is also referred to as a barrel. In Fig. 1, two rotation axes 206 are provided, in order along the direction orthogonal to the paper surface. The two rotation axes 206 are parallel to each other. Each rotation axis 206 extends in the length direction of the main body 208. One end of the rotation axis 206 penetrates the main body 208 and is connected to the drive device 214. Although not illustrated, in the gel-crushing device 200, the other end of the rotation axis 206 is rotatably supported by a bearing placed behind the rotation axis 206. That is, the rotation axis 206 is formed to be held at both ends. However, the gel-crushing device in the production method according to the present invention is not limited to such a double-supported form, and may have a so-called cantilever structure without a bearing behind the discharge port 210 as long as an object of the present invention is achieved. The Input port 204, the gas supply port 216, and the discharge port 210 are each fixed to the main body 208 and linked to the inside of the main body 208. The left-right direction in Fig. 1 is the length direction of the main body 208 and the axial direction of the rotation axis 206. Although not illustrated, the main body 208 has a jacket structure. The discharge port 210 may be installed on the lower side of the main body as illustrated in Fig. 1, or may be installed on the rear side of the main body. By installing the discharge port 210 at the rear side of the main body, a longer crushing section can be obtained even if the device size is equivalent.

Fig. 2 illustrates a part of the main body 208 of the gel-crushing device 200. Fig. 2 is an enlarged view of the gel-crushing device in Fig. 1 (a view of the central part of the main body as viewed from above). As illustrated in the drawing, the gel-crushing device 200 has two rotation axes 206 incorporated in the main body 208. Each of the two rotation axes 206 includes a screw 218 and a crusher 212 in this order from the side closer to the input port 204. Although not illustrated, a reverse screw for guiding the crushed product to the discharge port 210 may be installed immediately before the end plate installed behind the discharge port 210. The two rotation axes 206 each have an outer periphery on which a crusher 212 is provided. That is, the crusher 212 and the rotation axis 206 are configured as separate bodies. In this embodiment, the rotation axis 206 includes a plurality of disks as the crusher 212. The vertical direction in Fig. 2 is the width direction of the main body 208. The left-right direction in Fig. 2 is the length direction of the main body 208 and the axial direction of the rotation axis 206.

In a preferred embodiment in which the gel-crushing step is performed using the gel-crushing device 200, first, a heat medium is circulated in the jacket, which is not illustrated, to heat the main body 208. Thereafter, each rotation axis 206 is rotated by the drive device 214 (such as a motor). As the rotation axis 206 rotates, the rotation axis 206 and the plurality of disks as the crusher 212 rotate.

Next, a hydrogel is continuously put into the input port 204. At this time, water and/or water vapor may be simultaneously supplied into the input port 204. Furthermore, water vapor and/or water may be supplied into the gas supply port 216. The hydrogel and the main body 208 are heated by the water and/or the water vapor, and kept at a predetermined temperature.

The hydrogel put into the main body 208 comes into contact with the screw 218. Inside the main body 208, the hydrogel moves toward the discharge port 210 by the action of the rotating screw 218. A part of the hydrogel is roughly crushed by the rotation of the screw 218.

The hydrogel is in contact with the crusher 212 (that is, a plurality of disks) in the main body 208. The hydrogel is pulverized by shearing action of the plurality of rotating disks. The hydrogel moves toward the discharge port 210, while crushed by transfer action of the screw 218 and the shearing action of the crusher 212. At the discharge port 210, a particulate hydrogel adjusted to a predetermined particle size is taken out. In Fig. 1, the discharge port is disposed downward of the device so that the particulate hydrogel is taken out from below, but the discharge port may be disposed at the rear side of the device so that the particulate hydrogel is taken out from the rear side of the device.

The rotation axis of the gel-crushing device includes a plurality of screws having different shapes, and a plurality of disks as the crusher. The plurality of disks may have the same shape or different shapes.

Here, the shape of the disk is not limited, and examples thereof include a shape (flat disk, Fig. 8) illustrated in Fig.

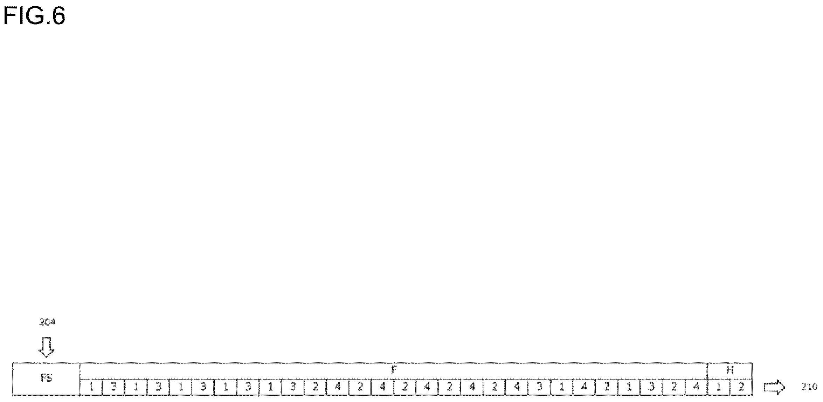

5 of JP 2013-139124 A and a shape (helical disk) illustrated in Fig. 6 of JP 2013-139124 A. An example of a flat disk is illustrated in Fig. 8. Fig. 8 is a front view of a flat disk, the flat disk 10 has an approximately elliptical shape as viewed from the front and has a hole 11 through which the axis of the screw 218 passes in a central region of the disk and flat portions 12 in the major axis direction. The major axis diameter X is the maximum length in a straight line connecting arbitrary two points passing through the center, and the minor axis diameter Y refers to the minimum length of a straight line connecting any two points passing through the center. In Fig. 8, the major axis diameter X indicates the length of a straight line connecting end points located at symmetrical position of the flat portions 12. The helical disk has the same shape as that of the flat disk except that the flat portions 12 are inclined in the thickness direction. The reverse helical disk has the same shape as that of the helical disk except that the flat portions 12 have an inverse inclination to that of the helical disk.

With respect to the disk major axis diameter X (mm), the disk minor axis diameter Y (mm) preferably satisfies $0.2 \leq Y/X \leq 0.6$, more preferably satisfies $0.3 \leq Y/X \leq 0.6$, and still more preferably satisfies $0.4 \leq Y/X \leq 0.6$. When Y/X is the above-described lower limit or more, the disk has a sufficient strength, and there is no or little risk of breakage of the disk even when the gel-crushing load increases. When Y/X is the above-described upper limit or less, the distance between the axes is appropriate and the device size does not become too large, which is preferable in terms of device cost. When the major axis diameter and the minor axis diameter differ among the disks, it is preferable that the major axis diameter and the minor axis diameter of each disk satisfy the above range.

Similarly, with respect to the disk major axis diameter X, the disk thickness T preferably satisfies $0.05 \leq T/X \leq 1.0$, more preferably satisfies $0.05 \leq T/X \leq 0.8$, and still more preferably satisfies $0.07 \leq T/X \leq 0.5$. When T/X is the above-described lower limit or more, the disk has a sufficient strength, and there is no or little risk of breakage of the disk even when the gel-crushing load increases. When T/X is the above-described upper limit or less, the disk pattern incorporated into the main body can be appropriately set, and the gel-crushing load can be easily adjusted. In addition, the weight of each disk is not too heavy, and the load of the replacement work is small even when the scale-up is done. In a preferred embodiment, with respect to the disk major axis diameter X, the disk minor axis diameter Y satisfies $0.2 \leq Y/X \leq 0.6$, and the disk thickness T satisfies $0.05 \leq T/X \leq 1.0$.

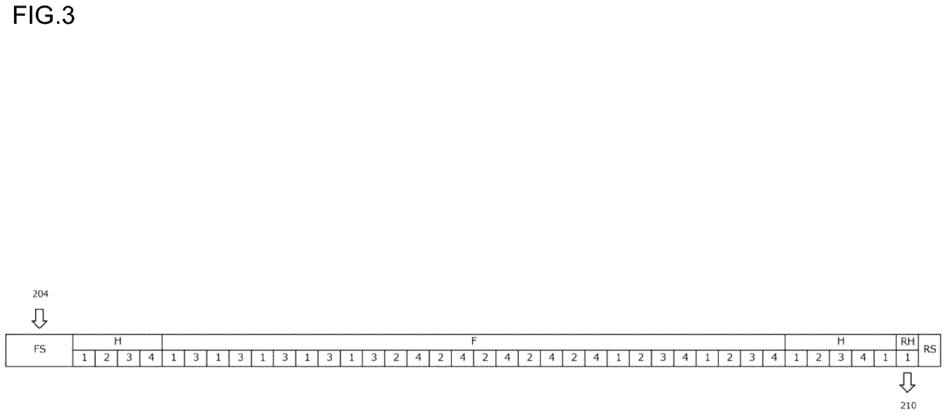

The combination of the screw and the disk is appropriately changed according to the physical properties of the hydrogel, an intended size of the particulate hydrogel, and the like with reference to, for example, Patent Literature (JP 2005-35212 A). A reference sign FS shown in Fig. 3 represents a feed screw, which mainly plays a role of conveying the input material to the inside of the main body. The reference sign RS represents a reverse screw, and by being installed in front of the end plate, it plays the role of reversing the flow of the material and guiding the material to the discharge port 210. The reference sign F represents a flat disk, which mainly plays a role of kneading. The reference sign H represents a helical disk, which plays a role of both kneading and conveying. The reference sign RH represents a reverse helical disk, which plays a role of kneading and returning (conveying backwards of material). Fig. 3 illustrates an example of a specific configuration of the rotation axis of the gel-crushing device used in Examples described below. The numerals 1 to 4 shown in Fig. 3 represent the phase angle of each disk. In the device of Fig. 3, the phase difference between the disks is set to 45 degrees. With a disk 1 as a reference, 2 indicates a state of being inclined by 45 degrees, 3 indicates a state of being inclined by 90 degrees, and 4 indicates a state of being inclined by 135 degrees in the direction opposite to the rotation direction of the rotation axis. With a disk 2 as a reference, 3 indicates a state of being inclined by 45 degrees, 4 indicates by 90 degrees, and 1 indicates by 135 degrees in the direction opposite to the rotation direction of the rotation axis. With a disk 3 as a reference, 4 indicates a state of being inclined by 45 degrees in the direction opposite to the rotation direction of the rotation axis, 1 indicates by 90 degrees and 2 indicates by 135 degrees in the rotation direction of the rotation axis. With a disk 4 as a reference, 1 indicates a state of being inclined by 45 degrees, 2 indicates by 90 degrees, and 3 indicates by 135 degrees in the direction opposite to the rotation direction of the rotation axis. When the phase difference between the disks adjacent to each other in the traveling direction from the input port to the discharge port is 45° in the rotation direction of the rotation axis, the gel is returned back in the direction opposite to the traveling direction, and when the phase difference between the disks adjacent to each other in the traveling direction from the input port to the discharge port is 90°, the gel stays at the position and thus is kneaded. When the phase difference between the disks adjacent to each other in the traveling direction from the input port to the discharge port is 45° in the direction opposite to the rotation direction of the rotation axis, the gel is sent in the traveling direction. Therefore, a conveying configuration is set when the disks are arranged in the order of 1→2→3→4→1 from the supply port to the discharge port, a kneading configuration is set when the disks are arranged in the order of 1→3→1→3 or 2→4→2→4, and a return configuration is set when the disks are arranged in the order of 4→3→2→1→4. The type, number, and arrangement of the disks are not limited to these specific examples, and are appropriately changed according to the physical properties of the hydrogel, an intended size of the particulate hydrogel, and the like. The phase difference is not limited to be set at a unit of 45 degrees. For example, the phase difference may be set at a unit of 15°, 30°, or 60°. When the phase difference between disks adjacent to each other in the traveling direction from the input port to the discharge port is more than 0° and less than 90° in the direction opposite to the rotation direction of the rotation axis, the phase is the conveying configuration and when the phase difference is 90°, the phase is the kneading configuration, and when the phase difference is more than 90° and less than 180°, the phase is the return configuration, and thus the phase difference is not limited to the specific examples.

In the present invention, it is preferable that the arrangement of the crusher of the gel-crushing device includes one or more locations of return configuration at which disks adjacent in the traveling direction from the input port to the discharge port have a phase difference of more than 90° and less than 180°. When the arrangement includes one or more locations having a phase difference of more than 90° and less than 180°, which is the return configuration, the location plays a role of obstructing the hydrogel inside the main body. With this arrangement, it is possible to reduce the coarse crosslinked particulate hydrogel polymer having a particle size of 10 mm or more contained in the crosslinked particulate hydrogel polymer discharged from the discharge port 210 in a short time immediately after the start of gel-crushing, and it is possible to reduce the amount of the coarse gel contained in the resulting crosslinked particulate hydrogel polymer. The locations at which disks adjacent to each other has a phase difference of more than 90° and less than 180° in the arrangement of the crusher of the gel-crushing device are appropriately set depending on the size of the device and the like, and, for example, the number of locations is, in order of ascending preference, 2 or more, 4 or more, 5 or more, 7 or more, 10 or more, and 14 or more, and the upper limit may be 30 or less and 20 or less.

Examples of the gel-crushing device include multiaxial kneaders (kneaders) having two or more axes. Specific examples of the multiaxial kneaders include biaxial, triaxial, four-axial, and eight-axial kneaders. As the gel-crushing device, a continuous crusher is preferably used from the viewpoint of production efficiency. Specific examples of the gel-crushing device include a CKH continuous kneader (manufactured by HONDA MACHINERY WORKS CO., LTD.), a twin-screw extruder, TEX (manufactured by The Japan Steel Works, Ltd.), a twin-screw extruder, TEX αIII (manufactured by The Japan Steel Works, Ltd.), a continuous kneader (CONTINUOUS KNEADER manufactured by DALTON CORPORATION), a KRC hybrid reactor (KRC HYBRID REACTER manufactured by Kurimoto, Ltd.), a KRC kneader (KURIMOTO-READCO CONTINUOUS KNEADER manufactured by Kurimoto, Ltd.), a KEX extruder (KEX EXTRUDER manufactured by Kurimoto, Ltd.), a KEXD extruder (KEXD EXTRUDER manufactured by Kurimoto, Ltd.), a double-arm kneader ruder (KNEADER-RUDER manufactured by MORIYAMA), a twin-screw kneading extruder, TEX-SSG (manufactured by Toshiba Machine Co., Ltd.), a twin-screw kneading extruder, TEX-CS (manufactured by Toshiba Machine Co., Ltd.), a twin-screw kneading extruder, TEX-SX (manufactured by Toshiba Machine Co., Ltd.), a twin-screw kneading extruder, TEX-DS (manufactured by Toshiba Machine Co., Ltd.), a twin-screw kneading extruder, TEX-A (manufactured by Toshiba Machine Co., Ltd.), a twin-screw kneading extruder, TEX-B (manufactured by Toshiba Machine Co., Ltd.), a twin-screw kneading extruder, TEX-BS (manufactured by Toshiba Machine Co., Ltd.), and quad/octa screw kneading extruders, WDR series (manufactured by TECHNOVEL CORPORATION). Therefore, in a preferred embodiment of the present invention, the gel-crushing device is a continuous multiaxial kneader.

(Gel-crushing coefficient)

The gel-crushing coefficient represents energy related to 1 g of gel per time in the gel-crushing device, that is, energy related to 1 g of hydrogel per time in the gel-crushing device, and is 0.02 J/g·sec or more and 3.0 J/g·sec or less. When the gel-crushing coefficient is less than 0.02 J/g·sec, the water absorption speed is slow and/or the residual monomer amount increases. When the gel-crushing coefficient is more than 3.0 J/g·sec, the residual monomer amount increases.

The above-described phrase "time in the gel-crushing device" refers to the average retention time of the crosslinked hydrogel polymer in the gel-crushing device. The above-described phrase "energy related to 1 g of gel" refers to gel crushing energy. That is, the gel-crushing coefficient is represented by gel crushing energy [J/g]/average retention time [s]. The average retention time and gel crushing energy are described below. In calculation of the gel-crushing coefficient, the gel crushing energy and the average retention time are calculated to the ones place, rounded the first decimal place are used, and the gel-crushing coefficient is obtained up to the second significant digit by rounding the third significant digit according to JIS Z8401:1999.

The gel-crushing coefficient is preferably 0.030 J/g·sec or more, more preferably 0.040 J/g·sec or more, and still more preferably 0.050 J/g·sec or more. The gel-crushing coefficient is preferably less than 2.9 J/g·sec, and may be 2.0 J/g·sec or less or 1.5 J/g·sec or less from the viewpoint of improving the water absorption speed, improving AAP (absorption capacity under load), and reducing the residual monomer amount. The gel-crushing coefficient is preferably 0.030 to 3.0 J/g·sec, more preferably 0.040 to 2.9 J/g·sec, and still more preferably 0.050 to 2.0 J/g·sec, and still even more preferably 0.080 to 1.5 J/g·sec.

(Gel grinding energy)

The gel grinding energy (GGE), which is described in WO 2011/126079 A (corresponding to US 2013/026412 A and US 2016/332141 A), means mechanical energy per unit mass (unit mass of a hydrogel) required by a gel-crushing device during gel-crushing the hydrogel. In the present invention, since the mechanical energy applied to the crosslinked hydrogel polymer is important, it is preferable to calculate the gel grinding energy by subtracting the current value in an idle operation of the gel-crushing device. In particular, when gel-crushing is performed by a plurality of devices, the total current value during the idle operation increases, and thus it is preferable to calculate the gel grinding energy by subtracting the current values during the idle operation. The gel grinding energy when the gel-crushing device is driven by three-phase AC power is calculated by the following Formula (1).

[Formula 1] Gel grinding energy [J/g] = $\{3^{1/2} \times$ voltage $\times$ (current value during gel-crushing - current value in idle operation) $\times$ power factor $\times$ motor efficiency$\}$/{mass of hydrogel put into gel-crushing device in 1 second}    Formula (1)

However, in the present application, in the calculation formula of the above Formula (1), a value calculated with both the power factor and the motor efficiency being 1 is defined as the gel grinding energy (GGE).

In the case of a gel-crushing device driven by single-phase AC power, the value $3^{1/2}$ in the above formula is changed to 1 to calculate the gel grinding energy. In the above Formula (1), the unit of the voltage is [V], the unit of the current is [A], and the unit of the mass of the hydrogel is [g].

The term "mass [g/s] of hydrogel put into gel-crusher in 1 second" in the above Formula (1) refers to, for example, a value converted to [g/s] if the crosslinked hydrogel polymer is continuously supplied with a quantitative feeder and the unit of the supply amount is [t/hr].

The gel grinding energy (GGE) is preferably 10 J/g or more, more preferably 15 J/g or more, and still more preferably 20 J/g or more. The gel grinding energy (GGE) is preferably 250 J/g or less, more preferably 200 J/g or less, and still more preferably 150 J/g or less. The gel grinding energy (GGE) is preferably 10 J/g or more and 250 J/g or less, more preferably 15 J/g or more and 200 J/g or less, and still more preferably 20 J/g or more and 150 J/g or less. When the gel grinding energy (GGE) is the above-described lower limit or more, the particle diameter of the hydrogel particles can be reduced, and the water absorption speed is further improved, which is preferable. When the gel grinding energy (GGE) is the above-described upper limit or less, an increase in device cost can be suppressed, and compaction (excessive aggregation) between gel particles can be suppressed, so that the water absorption speed is improved.

The gel grinding energy (GGE) can be adjusted by, for example, a disk pattern (= adjustment of filling rate inside the device, type, number, arrangement, and the like of disks as shown in Figs. 3 to 7), an amount of water/water vapor supplied to the gel-crushing device, the rotation speed of the rotation axis, and the like. For example, when there are many points of return configuration in the disk pattern, gel grinding energy (GGE) tends to increase.

(Average retention time)

The average retention time of the crosslinked hydrogel polymer in the gel-crushing device is, in order of ascending preference, 20 seconds or more, 30 seconds or more, 35 seconds or more, 40 seconds or more, 45 seconds or more, or 50 seconds or more from the viewpoint of reducing the residual monomer. The average retention time of the crosslinked hydrogel polymer in the gel-crushing device is, in order of ascending preference, 1200 seconds or less, 1000 seconds or less, 800 seconds or less, 700 seconds or less, or 600 seconds or less from the viewpoint of productivity and device cost. The average retention time of the crosslinked hydrogel polymer in the gel-crushing device is preferably 20 seconds or more and 1200 seconds or less, preferably 30 seconds or more and 1200 seconds or less, more preferably 30 seconds or more and 1000 seconds or less, still more preferably 35 seconds or more and 800 seconds or less, particularly preferably 40 seconds or more and 700 seconds or less, and most preferably 45 seconds or more and 600 seconds or less. When the average retention time of the crosslinked hydrogel polymer in the gel-crushing device is the above-described lower limit or more, compaction (excessive aggregation) between gel particles is suppressed and the water absorption speed is further improved, which is preferable. When the average retention time of the crosslinked hydrogel polymer in the gel-crushing device is the above-described upper limit or less, productivity is improved and mechanical damage to the hydrogel is reduced, which is preferable.

The average retention time of the hydrogel is adjusted by the ratio (L/D) of the effective length L inside the main body of the gel-crushing device to the maximum diameter D of the disk, the disk pattern (= adjustment of filling rate inside the device, type, number, arrangement, and the like of disks as shown in Figs. 3 to 7), the input speed of the hydrogel, the amount of water/water vapor supplied to the gel-crushing device, and the like. When L/D is high, the input speed of the hydrogel is low, or the amount of water/water vapor supplied to the gel-crushing device is large, the average retention time tends to be long.

As the average retention time of the crosslinked hydrogel polymer in the gel-crushing device, a value measured by the method described in Examples is adopted.

(Gel temperature)

In the gel-crushing step, a temperature T1 of the crosslinked hydrogel polymer to be put into the input port of the gel-crushing device (hereinafter, also referred to as "gel temperature T1 at the input port" or simply "gel temperature T1") is preferably 50°C or higher. By controlling the gel temperature T1 in this way, the crosslinked hydrogel polymer is easily continuously crushed at 50°C or higher as a preferred embodiment. The gel temperature T1 is preferably measured with a thermometer placed at the input port. The gel temperature T1 is preferably 60°C or higher from the viewpoint of preventing adhesion between crushed hydrogels, and is more preferably 70°C or higher and still more preferably 80°C or higher from the viewpoint of further improving the water absorption speed of the water-absorbing resin powder. The gel temperature T1 is preferably 130°C or lower, more preferably 110°C or lower, still more preferably 100°C or lower, and particularly preferably 90°C or lower, from the viewpoint of suppressing excessive drying. For the same reason, the gel temperature at the time of crushing is preferably 130°C or lower. The gel temperature T1 of the crosslinked hydrogel polymer to be put into the gel-crushing device can be adjusted within a desired range by keeping the temperature of the crosslinked hydrogel polymer in which temperature rise is caused by heat of polymerization, or by heating the obtained crosslinked hydrogel polymer.

The temperature T2 of the crosslinked particulate hydrogel polymer discharged from the gel-crushing device (hereinafter, also referred to as "gel temperature T2 at the discharge port" or simply "gel temperature T2") is preferably 60°C to 140°C, more preferably 70°C to 130°C, still more preferably 80°C to 125°C and 85°C to 120°C, particularly preferably 90°C to 115°C, and most preferably 100 to 115°C, from the viewpoint of suppressing aggregation between crushed hydrogels. It is preferable that the temperature T2 be set in this temperature range and the temperature T1 be set in the above-described temperature range. The gel temperature T2 is preferably measured with a thermometer placed at the discharge port. The gel temperature T2 can be adjusted within a desired range by appropriately adjusting the preset temperature of the heating means and/or the heat-retaining means of the gel-crushing device, and by adjusting the retention time of the crosslinked hydrogel polymer inside the gel-crushing device.

The gel temperature T2 at the discharge port is preferably higher than the gel temperature T1 at the input port from the viewpoint of further improving the water absorption speed of the water-absorbing resin powder. The difference $\Delta T = (T2 - T1)$ is preferably 5°C or higher, more preferably 8°C or higher, and still more preferably 10°C or higher. The difference $\Delta T = (T2 - T1)$ is preferably 60°C or lower, more preferably 50°C or lower, still more preferably 40°C or lower, and particularly preferably 35°C or lower. It is preferable that the difference $\Delta T = (T2 - T1)$ be set in this temperature range and the temperature T1 and the temperature T2 be set in the above-described temperature range. $\Delta T$ can be adjusted within a desired range by adjusting each of T1 and T2 as described above.

(Gel solid content)

In the gel-crushing step, the solid content of the hydrogel to be put into the input port of the gel-crushing device (hereinafter, referred to as a gel solid content) is determined with the measurement method described in Examples below. The gel solid content is preferably 25 mass% to 75 mass%, more preferably 30 mass% to 70 mass%, still more preferably 35 mass% to 65 mass%, and particularly preferably 40 mass% to 60 mass%, from the viewpoint of the degree of aggregation between crushed hydrogels, the energy required for crushing, the drying efficiency, and the absorption performance.

(Gel-fluidizing agent)

In the production method according to the present invention, a gel-fluidizing agent is preferably added before and/or during the gel-crushing step. As a result, a particulate hydrogel containing the gel-fluidizing agent is taken out from the discharge port. That is, in a preferred embodiment of the present invention, the crosslinked particulate hydrogel polymer contains the gel-fluidizing agent. Adding the gel-fluidizing agent enables to obtain an effect of suppressing strong adhesion or bonding between finely crushed gel fine particles and improving the water absorption speed of the obtained water-absorbing resin. Furthermore, the load is reduced in the pulverizing step after the drying step and the cracking step during the sizing step described below, resulting in a further effect of reducing the amount of fine powder generated. The gel-fluidizing agent is more preferably added during the gel-crushing step and still more preferably added simultaneously with input of the hydrogel (from the input port of the hydrogel), from the viewpoint that the particles of the resulting particulate hydrogel uniformly contain the gel-fluidizing agent.

The amount of the gel-fluidizing agent added is appropriately set according to the solid content of the hydrogel or the particulate hydrogel and the kind of the gel-fluidizing agent. The amount is preferably 0.001 mass% to 5 mass%, more preferably 0.01 mass% to 3 mass%, still more preferably 0.02 mass% to 2 mass%, and particularly preferably 0.03 mass% to 1 mass% with respect to the solid content of the hydrogel.

Examples of the gel-fluidizing agent include anionic, cationic, nonionic, and amphoteric surfactants, low-molecular-weight surfactants and high-molecular-weight surfactants thereof, and polymer lubricants. Among them, surfactants are preferable.

(Surfactant)

Specific examples of the surfactant used as the gel-fluidizing agent include (1) nonionic surfactants such as sucrose fatty acid esters, polyglyceryl fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucosides, N-alkyl gluconamides, polyoxyethylene fatty acid amides, polyoxyethylene alkylamines, phosphoric acid esters of polyoxyethylene alkyl ethers, and phosphoric acid esters of polyoxyethylene alkyl allyl ethers, (2) amphoteric surfactants such as alkyl dimethylaminoacetic acid betaines such as caprylic dimethylaminoacetic acid betaine, lauryl dimethylaminoacetic acid betaine, myristyl dimethylaminoacetic acid betaine, and stearyl dimethylaminoacetic acid betaine, alkylamide propyl betaines such as lauric acid amide propyl betaine, coconut oil fatty acid amide propyl betaine, and palm kernel oil fatty acid amide propyl betaine, alkyl hydroxysulfobetaines such as lauryl hydroxysulfobetaine, and alkyl carboxymethyl hydroxyethyl imidazolinium betaines such as 2-alkyl-N-carboxymethyl-N-hydroxyethyl imidazolinium betaine, (3) anionic surfactants such as alkyl amino diacetic acid monoalkali metal salt such as lauryl amino diacetic acid monosodium salt, lauryl amino diacetic acid potassium, and myristyl amino sodium diacetate, and (4) cationic surfactants such as long-chain alkyl dimethylaminoethyl quaternary salts. Two or more of these may be used in combination. Among them, amphoteric surfactants are preferable, and alkyl dimethylaminoacetic acid betaines are more preferable from the viewpoint of further improving the water absorption speed of the water-absorbing resin powder.

(Polymer lubricant)

In the production method according to the present invention, polymer lubricants exemplified below can be added to the aqueous monomer solution or the hydrogel as long as an object of the present invention is achieved.

Specific examples of the polymer lubricant include maleic anhydride-modified polyethylene, maleic anhydride-modified polypropylene, a maleic anhydride-modified ethylene-propylene copolymer, a maleic anhydride-modified ethylene-propylene-diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, ethyl hydroxyethyl cellulose, polyalkylene oxides such as polyethylene glycol, and side-chain and/or terminal polyether-modified polysiloxanes. These polymer lubricants have a molecular weight (weight average molecular weight) appropriately selected in a range of preferably 200 to 2000000, and more preferably 400 to 1000000. Two or more of these may be used in combination.

These polymer lubricants and the above-described surfactants may be also used in combination as a gel-fluidizing agent. In the case of using a surfactant and a polymer lubricant in combination, the total amount of the surfactant and the polymer lubricant added is appropriately set according to the form of polymerization, the composition of the aqueous monomer solution, and the moisture content of the hydrogel. In the case of adding the surfactant and the polymer lubricant to the aqueous monomer solution, the concentration with respect to the monomer component is set, in the case of adding to the hydrogel, the concentration with respect to the solid content of the hydrogel is set, and in the case of adding to both the aqueous monomer solution and the hydrogel, the sum of the above is set.

The total amount of the surfactant and the polymer lubricant added is preferably 5 mass% or less and more preferably 3 mass% or less, and preferably 0.001 mass% or more and particularly preferably 0.01 mass% or more with respect to the solid content of the hydrogel.

(Surface tension)

The kind and the amount of the gel-fluidizing agent added are appropriately adjusted in consideration of, for example, suppression of aggregation of the particulate hydrogel in the gel-crushing step and the drying step. The kind and the amount of the gel-fluidizing agent are preferably such that the surface tension of the water-absorbing resin in the final product is not excessively reduced, from the viewpoint of, for example, the amount of returned liquid in actual use of the resulting water-absorbing resin powder in an absorbent article (diaper). For example, the kind and the amount of the gel-fluidizing agent are selected so that the surface tension of the water-absorbing resin (surface tension of the dispersion of the water-absorbing resin in physiological saline) is preferably 55 mN/m or more, more preferably 60 mN/m or more, and still more preferably 65 mN/m or more. This surface tension is measured with the method described in WO 2015/129917. Examples of the gel-fluidizing agent capable of setting the surface tension within such a range include amphoteric surfactants.

(Other additives)

The surface-crosslinking agents described in [2-7-1] and other additives described in [2-10] may be added during the gel-crushing step or during transition from the gel-crushing step to the next drying step.

(Particle size of particulate hydrogel)

In the production method according to the present invention, the crosslinked particulate hydrogel polymer discharged from the discharge port of the gel-crushing device has a mass average particle diameter d1 of 500 μm or less as converted to a solid content, from the viewpoint of the absorption speed of the water-absorbing resin powder. When d1 is more than 500 μm, the water absorption speed decreases (Comparative Example 2 described below). Preferably, d1 is 460 μm or less, more preferably 400 μm or less, and still more preferably 350 μm or less. Since d1 is preferably as small as possible, the lower limit thereof is not particularly limited, but is usually 1 μm or more, and may be 10 μm or more, 20 μm or more, 30 μm or more, or 50 μm or more. The mass average particle diameter d1 of the crosslinked particulate hydrogel polymer converted to a solid content discharged from the discharge port of the gel-crushing device can be controlled by, for example, an average retention time in the crushing device, gel grinding energy (GGE), and the like. As the average retention time is shorter, d1 tends to be larger. In addition, d1 tends to increase as the gel grinding energy (GGE) decreases. The mass average particle diameter d1 of the particulate hydrogel converted to a solid content is defined by the method of measuring physical properties (g) described below.

In the particle size distribution of the particulate hydrogel, the rate of particles having a particle size in the range of less than 150 μm as converted to a solid content is preferably 10 mass% or more, more preferably 25 mass% or more, and still more preferably 40 mass% or more. In the particle size distribution of the particulate hydrogel, the rate of particles having a particle size in the range of less than 850 μm as converted to a solid content is preferably 80 mass% or more, more preferably 85 mass% or more, still more preferably 90 mass% or more, and particularly preferably 95 mass% or more, and the upper limit is 100 mass%. The logarithmic standard deviation ($\sigma\zeta$) of the particle size distribution is 0.2 to 1.0, more preferably 0.2 to 0.8, and still more preferably 0.2 to 0.7.

(Solid content of particulate hydrogel)

The particulate hydrogel discharged from the discharge port of the gel-crushing device preferably has a solid content of 25 mass% to 75 mass%, more preferably 30 mass% to 70 mass%, still more preferably 35 mass% to 65 mass%, and particularly preferably 40 mass% to 60 mass%. By subjecting a particulate hydrogel having a solid content in the above range to the drying step, a granular dried product having a high CRC and little damage from drying (such as an increase of the water soluble component) is obtained.

(Rate of polymerization of particulate hydrogel)

The rate of polymerization of the particulate hydrogel discharged from the gel-crushing device is in the range of the rate of polymerization before input into the gel-crushing device, and the polymerization may be further progressed in the gel-crushing step. The degree of progress of polymerization is appropriately adjusted by heating and retention time in the gel-crushing device, the amount of the polymerization initiator remaining in the hydrogel after polymerization, the amount of an optional post-added polymerization initiator, and the like. The rate of polymerization after the gel-crushing step is defined by the methods of measuring physical properties described below, as the rate of polymerization before gel-crushing. The rate of polymerization of the particulate hydrogel after gel-crushing is 90 mass% or more, preferably 95 mass% or more, more preferably 98 to 99.99 mass%, and ideally 100 mass%. In the particulate hydrogel having a rate of polymerization in the above range, aggregation and adhesion during drying are avoided.

[2-5] Drying step

This is a step of drying the crosslinked particulate hydrogel polymer, preferably the crosslinked particulate hydrogel polymer containing a gel-fluidizing agent to a desired solid content to obtain a dried product. The term "solid content" means a value calculated from the amount lost from drying (mass change at the time of drying 1.0 g of a sample at 180°C for 3 hours).

The solid content of the dried product after the drying step is preferably 80 mass% or more, more preferably 85 mass% to 99.8 mass%, still more preferably 90 mass% to 99.7 mass%, still even more preferably 92 mass% to 99.5 mass%, particularly preferably 96 mass% to 99.5 mass%, and extremely preferably 98 mass% to 99.5 mass%. If the solid content after drying is excessively high, not only long-time drying is required, but also deterioration of physical properties and coloring may be caused after drying. If the solid content after drying is low, the productivity in the sizing step described below may deteriorate, and the centrifuge retention capacity (CRC) may deteriorate. In a case where the surface crosslinking step described below is performed after the drying step, drying to the above-described solid content further improves the physical properties, and therefore such drying is preferable. The moisture content (= 100 - solid content) of the dried product is determined from the solid content.

The drying method in the drying step of the present invention is not particularly limited, and ventilation drying, stirring drying, fluidized bed drying, or the like is appropriately used. Various drying methods can be used such as heat drying, hot gas drying, drying under reduced pressure, infrared drying, microwave drying, drum dryer drying, drying by azeotropic dehydration with a hydrophobic organic solvent, and high humidity drying by use of high temperature water vapor.

(Dryer)

The dryer used in the drying step is not particularly limited, and one or more of a conductive heat transfer dryer, a radiation heat transfer dryer, a hot gas heat transfer dryer, a dielectric heating dryer, and the like are appropriately selected. A batch or continuous dryer may be used. A direct heating or indirect heating dryer may be used. Examples of the dryer include heat transfer dryers such as a through-flow band drier, a through-flow circuit drier, a vertical through-flow drier, a parallel flow band drier, a through-flow tunnel drier, a through-flow stirring drier, a through-flow rotating dryer, a fluidized-bed drier, and an air flow drier. To perform band drying (through-flow band drying) in which hot gas drying is performed on a through-flow belt, various conditions described in WO 2006/100300 A, WO 2011/025012 A, WO 2011/025013 A, WO 2011/111657 A, and the like are appropriately applied.

The heating means is not particularly limited, but from the viewpoint of drying efficiency and reduction of thermal damage to the water-absorbing resin, the heating means for the particulate hydrogel preferably uses direct heat transfer by convection heat transfer and/or indirect heat transfer by heat conduction from a heating surface (contact surface with the particulate hydrogel, heat source portion) of the dryer heated with a heat medium. More preferable heating means include ventilation heating by direct heat transfer, and outer wall heating and tubular heating by indirect heat transfer.

In the drying step, a gas may be introduced into the dryer. The gas is not particularly limited, and examples of the gas include air, dry air, nitrogen, water vapor, and mixed gases thereof. The gas acts as a carrier gas to discharge water vapor generated during drying to the outside of the dryer, and thus promotes drying. In the case of using a heated gas, the gas also acts as a heat medium, and thus further promotes drying. Preferably, a gas is used such as nitrogen, water vapor, or a mixed gas of these with air. In the case of using a mixed gas containing water vapor (hereinafter, also referred to as a high humidity mixed gas), the inside of the dryer is in a low oxygen state, and thus oxidation and deterioration during drying are suppressed. As a result, the water-absorbing resin can achieve performance improvement and low coloring. The gas may flow in the direction parallel, opposite, or both parallel and opposite to the moving direction of the particulate hydrogel as an object to be dried.

The drying conditions are appropriately selected according to the kind of the dryer, the solid content of the particulate hydrogel, and the like, but the drying temperature is preferably 100°C to 300°C, more preferably 150°C to 250°C, still more preferably 160°C to 220°C, and particularly preferably 170°C to 200°C. A drying temperature lower than the above range extends the drying time excessively, and therefore is uneconomical. A drying temperature higher than the above range causes deterioration of physical properties and remarkable coloring in the water-absorbing resin, and therefore is not preferable. The drying time is preferably 1 minute to 10 hours, more preferably 5 minutes to 2 hours, still more preferably 10 minutes to 120 minutes, and particularly preferably 20 minutes to 60 minutes. A drying time less than the above range needs an excessively high drying temperature and thus causes deterioration of physical properties and remarkable coloring in the water-absorbing resin, and therefore is not preferable. A drying time more than the above range needs a huge dryer and causes a decrease in the throughput, and therefore is uneconomical.

In the present invention, stirring and drying using a stirring dryer can also be employed as a preferred drying method. This stirring and drying is one type of drying operation using conductive heat transfer, and the object to be dried can be dried preferably continuously using an indirect heating method. For this reason, drying efficiency is high and deterioration in physical properties of the resulting water-absorbing resin can be suppressed, which is advantageous. The stirring method and formation of the stirring dryer are not particularly limited, and examples thereof include the container rotary dryer in which the container containing contents rotates, vibrates, and swings; a mechanical stirring dryer that stirs contents with a rotation axis having a stirring blade such as an arm, a blade, or a paddle; a floating type dryer that floats contents with gas such as air; a flow path division type dryer that divides flow path by gravity, branch plate, and the like; a high-speed shear type dryer; and an impact type dryer. In the drying step of the present invention, material stirring type drying in which an object to be dried is dried while being stirred can also be suitably employed. In the material stirring type drying, since adjacent objects to be dried (particulate hydrogel) are sequentially replaced while being stirred, certain particles contact new particles one after another. As a result, objects to be dried (particulate hydrogel) are efficiently heated by direct heat transfer and/or indirect heat transfer, and excessive aggregation or agglomeration of particulate hydrogels is suppressed. When stirring and drying is performed using the above-described stirring dryer, various conditions described in WO 2018/092863 A and WO 2018/092864 A are appropriately applied.

In the present drying step, drying of the particulate hydrogel and the heat treatment step of the surface crosslinking step can be performed in the same step by adding a surface-crosslinking agent described later.

[2-6] Pulverizing and classification step

This is a step of pulverizing and/or classifying the dried product obtained in the drying step to obtain a water-absorbing resin powder preferably having a specific particle size. This step is different from the [2-4] gel-crushing step in that the object to be pulverized is obtained through the drying step.

This step is performed before and/or after the [2-7] surface crosslinking step, and preferably before the [2-7] surface crosslinking step. This step may be performed two or more times before and after the [2-7] surface crosslinking step.

Examples of the device (pulverizer) used in the pulverizing step of the present invention include high-speed rotary pulverizers such as roll mills, hammer mills, screw mills, and pin mills, vibrating mills, knuckle pulverizers, and cylindrical mixers, and these devices are used in combination as necessary.

(Particle size)

The water-absorbing resin powder before surface crosslinking preferably has a mass average particle diameter (D50) of 200 $\mu$m or more, more preferably 200 $\mu$m to 600 $\mu$m, still more preferably 220 $\mu$m to 550 $\mu$m, and particularly preferably 250 $\mu$m to 500 $\mu$m from the viewpoint of water absorption speed, absorption capacity under load, and the like.

The content of fine particles having a particle diameter of less than 150 $\mu$m that are classified by standard sieving is preferably as small as possible, and is preferably 0 to 5 wt%, more preferably 0 to 3 wt%, and still more preferably 0 to 2 wt% with respect to the entire water-absorbing resin powder.

The content of coarse particles having a particle diameter of more than 850 $\mu$m that are classified by standard sieving is also preferably as small as possible, and is preferably 0 to 5 wt%, more preferably 0 to 3 wt%, and still more preferably 0 to 1 wt% with respect to the entire water-absorbing resin powder, from the viewpoint of water absorption speed and the like.

The proportion of particles having a particle diameter of 150 $\mu$m or more and less than 850 $\mu$m is preferably 90 wt% or more, more preferably 95 wt% or more, still more preferably 98 wt% or more, and particularly preferably 99 wt% or more (with an upper limit of 100 wt%) with respect to the entire water-absorbing resin powder, from the viewpoint of water absorption speed, absorption capacity under load, and the like.

[2-7] Surface crosslinking step

This is a step of adding a surface-crosslinking agent that reacts with a functional group (particularly a carboxyl group) in the water-absorbing resin powder to cause a crosslinking reaction, and is also referred to as a post-crosslinking step. In this step in the production method according to the present invention, a surface-crosslinking agent is added to the water-absorbing resin powder, and then the resulting powder is heat-treated to cause a crosslinking reaction. In the water-absorbing resin powder obtained by the configuration of the present invention, since aggregation and coalescence between particles are suppressed, a layer of a surface treatment agent is easily formed on the entire surface of each particle, and the surface treatment layer is likely to be maintained even when pulverization is performed after the surface crosslinking step. Therefore, the resulting water-absorbing resin tends to have a high AAP (absorption capacity under load). In this regard, a preferred embodiment of the present invention further includes a surface crosslinking step after the gel-crushing step. This step includes a surface-crosslinking agent addition step and a heat treatment step, and may include a cooling step after the heat treatment step as necessary. Further, various conditions described in WO 2018/092863 A may be appropriately applied. The surface crosslinking step can be performed, for example, simultaneously with the drying step, after the drying step, after the pulverizing and classification step, and the like.

[2-7-1] surface-crosslinking agent addition step

This is a step of mixing the water-absorbing resin powder and a surface-crosslinking agent to prepare a water-absorbing resin powder containing a surface-crosslinking agent to be subjected to the surface crosslinking step.

(Surface-crosslinking agent)

The surface-crosslinking agent used is capable of reacting, preferably capable of covalently bonding or ionically bonding, and more preferably capable of covalently bonding with a plurality of functional groups (preferably a plurality of carboxyl groups) in the water-absorbing resin. Specific examples of the surface-crosslinking agent include: polyhydric alcohol compounds such as ethylene glycol, diethylene glycol, propylene glycol, triethylene glycol, tetraethylene glycol, polyethylene glycol, 1,3-propanediol, dipropylene glycol, 2,2,4-trimethyl-1,3-pentanediol, polypropylene glycol, glycerin, polyglycerin, 2-butene-1,4-diol, 1,3-butanediol, 1,4-butanediol, 1,5-pentanedial, 1,6-hexanediol, 1,2-cyclohexanedimethanol, 1,2-cyclohexanol, trimethylolpropane, diethanolamine, triethanolamine, polyoxypropylene, an oxyethylene-oxypropylene block copolymer, pentaerythritol, and sorbitol; epoxy compounds such as ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol polyglycidyl ether, glycidol, sorbitol polyglycidyl ether, pentaerythritol polyglycidyl ether, trimethylolpropane polyglycidyl ether, neopentyl glycol diglycidyl ether, and 1,6-hexanediol diglycidyl ether; polyvalent amine compounds such as ethylene diamine, diethylene triamine, triethylene tetramine, tetraethylene pentamine, pentaethylene hexamine, polyethyleneimine, and inorganic salts and organic salts thereof; polyvalent isocyanate compounds such as 2,4-tolylene diisocyanate and hexamethylene diisocyanate; aziridine compounds such as polyaziridine; polyvalent oxazoline compounds such as 1,2-ethylenebisoxazoline, bisoxazoline, and polyoxazoline; carbonic acid derivatives such as urea, thiourea, guanidine, dicyandiamide, and 2-oxazolidinone; alkylene carbonate compounds such as 1,3-dioxolan-2-one (ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxane-2-one, 4-methyl-1,3-dioxane-2-one, 4,6-dimethyl-1,3-dioxane-2-one, and 1,3-dioxopan-2-one; haloepoxy compounds such as epichlorohydrin, epibromohydrin, α-methylepichlorohydrin, and polyvalent amine adducts thereof; oxetane compounds; silane coupling agents such as γ-glycidoxypropyltrimethoxysilane and γ-aminopropyltriethoxysilane; and polyvalent metal compounds such as hydroxides, chlorides, sulfates, nitrates, and carbonates of zinc, calcium, magnesium, aluminum, iron, zirconium, and the like. Two or more of these may be used in combination. Among the surface-crosslinking agents, one or more selected from polyhydric alcohol compounds, polyvalent metal ions, epoxy-based compounds, oxazoline-based compounds, and alkylene carbonate compounds are preferable, and one or more selected from polyvalent metal ions, epoxy-based compounds, oxazoline-based compounds, and alkylene carbonate compounds are more preferable.

(Surface-crosslinking agent solution)

The amount of the surface-crosslinking agent added is preferably 5 mass% or less, more preferably 3 mass% or less, still more preferably 2 mass% or less, still even more preferably 1 mass% or less, and particularly preferably 0.1 mass% or less with respect to the solid content of the water-absorbing resin. The lower limit is preferably 0.001 mass% or more, and more preferably 0.01 mass% or more.

The surface-crosslinking agent may be added in its original form, but from the viewpoint of ease of addition, the surface-crosslinking agent is preferably added in a form of a solution in which the surface-crosslinking agent is dissolved in water or an organic solvent. The concentration of the surface-crosslinking agent solution is preferably 1 mass% or more, and more preferably 2 mass% or more. The total amount of the solvent selected from water and an organic solvent is preferably 0 to 10 mass%, more preferably 0.1 mass% to 8 mass%, and still more preferably 0.5 mass% to 5 mass% with respect to the solid content of the water-absorbing resin. In the case of using water and an organic solvent in combination, water is preferably the main component.

In a case where the surface-crosslinking agent is added as an aqueous solution, the concentration in the aqueous solution can be adjusted according to the moisture content of the water-absorbing resin powder at the time of contact with the surface-crosslinking agent, and therefore such a case is preferable. In the case of a surface-crosslinking agent having too low a solubility in water to form a solution, a hydrophilic solvent such as an alcohol is preferably added appropriately to form a homogeneous solution.

[2-6-2] Heat treatment step

This is a step of heat-treating the water-absorbing resin powder containing the surface-crosslinking agent to obtain a surface-crosslinked dried product.

(Surface crosslinking temperature)

In this step, the water-absorbing resin powder containing the surface-crosslinking agent is preferably heated to 100°C or higher. The preferred maximum temperature depends on the kind of the surface-crosslinking agent, but the maximum temperature is preferably 100°C to 250°C, more preferably 120°C to 230°C, and still more preferably 150°C to 210°C.

(Time)

The time of the heat treatment step is to be appropriately set from the moisture content of the object of the heat treatment step, the kind of the surface-crosslinking agent, the thermal efficiency of the heating device, and the like. As a rough indication, the water-absorbing resin powder is to be heated to a moisture content of 10 mass% or less, and the heating time is in the range of 10 minutes to 120 minutes, and preferably 30 minutes to 90 minutes.

(Heating formation)

The heating device used in the surface crosslinking step is not particularly limited, but from the viewpoint of restraining uneven heating, a heating device is preferably used that has a stirring mechanism in a conductive heat transfer form by solid-solid contact.

[2-7] Cooling step

The production method according to the present invention preferably includes a cooling step of forcibly cooling the dried product or the surface-crosslinked dried product to adjust the temperature to a desired temperature after the drying step or the surface crosslinking step and before the sizing step described below. The cooling step can be performed using a conventionally known cooling means. The cooling temperature can be appropriately adjusted. Regarding the cooling step ([2-7]) to the fine powder recycle step ([2-9]), the various conditions disclosed in WO 2018/092864 A may be appropriately applied.

[2-8] Sizing step

This is a step of adjusting the particle size of the surface-crosslinked water-absorbing resin powder. By this sizing step, a water-absorbing resin powder is obtained in which the particle diameter or the particle size distribution is further actively controlled.
The sizing step preferably includes a cracking step and/or a classifying step. The cracking step is a step of cracking the granular product loosely aggregated through the surface treatment step with a cracking machine to adjust the particle diameter. The classifying step is a step of removing coarse particles and fine powder from the surface-crosslinked granular product or the cracked product of the dried product using a classifier.
The cracking machine is not particularly limited, and examples of the cracking machine include vibrating mills, roll granulators, knuckle pulverizers, roll mills, high-speed rotary pulverizers (pin mills, hammer mills, and screw mills), and cylindrical mixers. The cracking machine is preferably less likely to damage the dried product or the surface-crosslinked dried product, and specific examples of such a cracking machine include a roll granulator (manufactured by MATSUBO Corporation), a granulator (manufactured by Kurimoto, Ltd.), and a roundel mill (manufactured by TOKUJU CORPORATION). As the classifier, a vibrating or swing sieve classifier with a sieve mesh is used.

[2-9] Fine powder recycle step

The term "fine powder recycle step" means a step of supplying the fine powder removed in the classifying step, in the original form of the removed fine powder or after granulating the removed fine powder, to any step. The fine powder recycle step is preferably a step of putting the fine powder or the granulated product of the fine powder into a step before the drying step for reuse. Examples of the step before the drying step include the step for preparing an aqueous monomer solution, the polymerization step in which hydrogel is being polymerized, the gel-crushing step of a hydrogel after polymerization, and the drying step of a particulate hydrogel. To these steps, the fine powder may be added as it is, or may be added after being swollen and gelled, or granulated with water. Together with the fine powder, agents may be added such as water, a crosslinking agent, binders other than water (such as a water soluble polymer and a thermoplastic resin), a polymerization initiator, a reducing agent, a chelating agent, and a coloring inhibitor.
A preferred amount of the fine powder recycled is appropriately set according to an intended particle size.

[2-10] Other steps

The production method according to the present invention may further include a pulverizing step, a classification step, a re-moistening step, a granulating step, a transporting step, a storing step, a packaging step, a reserving step, and the like as necessary, in addition to the above-described steps.

(Other additives)

In addition to the surface-crosslinking agent and the gel-fluidizing agent that are optionally used, conventionally known components can be further added as other additives before or after drying, and examples of the components include polymer powders (for example, starch such as tapioca starch acetate), inorganic fine particles, a dust inhibitor, a dried water-absorbing resin (fine powder), a liquid permeability improver, and a reducing agent (for example, sodium sulfite).

[3] Physical properties of water-absorbing resin powder as product

In the water-absorbing resin powder (in particular, a surface-crosslinked water-absorbing resin powder is also referred to as a water-absorbing agent) obtained by the production method according to the present invention, it is desirable that at least one, preferably two or more, more preferably three or more, and still more preferably all of the physical properties listed in the following (3-1) to (3-5) are controlled within a desired range when the water-absorbing resin powder or the water-absorbing agent is used in absorbent articles, particularly disposable diapers. If all the following physical properties do not satisfy the following ranges, the effects of the present invention may not be sufficiently obtained.

[3-1] CRC (centrifuge retention capacity)

The water-absorbing resin powder (water-absorbing agent) of the present invention usually has a CRC (centrifuge retention capacity) of 5 g/g or more, preferably 15 g/g or more, more preferably 25 g/g or more, and still more preferably 30 g/g or more. The upper limit is not particularly limited and a higher CRC is preferable, but from the viewpoint of balance with other physical properties, the upper limit is preferably 70 g/g or less, more preferably 50 g/g or less, and still more preferably 40 g/g or less.

A water-absorbing resin powder having a CRC of less than 5 g/g absorbs a small amount of liquid, and thus is not suitable as an absorbent body of an absorbent article such as a disposable diaper. A water-absorbing resin powder having a CRC of more than 70 g/g absorbs a body fluid such as urine or blood at a reduced speed, and therefore is not suitable for use in disposable diapers and the like required a high water absorption speed. The CRC can be controlled by changing the kind and the amount of the internal crosslinking agent, the surface-crosslinking agent, and the like.

[3-2] Moisture content and solid content

The water-absorbing resin powder (water-absorbing agent) preferably has a moisture content of more than 0 mass% and 20 mass% or less, more preferably 1 mass% to 15 mass%, still more preferably 2 mass% to 13 mass%, and particularly preferably 2 mass% to 10 mass%. By setting the moisture content within the above range, a water-absorbing agent is obtained that has excellent powder characteristics (for example, fluidity, transportability, and damage resistance). The surface-crosslinked water-absorbing resin powder (water-absorbing agent) preferably has a solid content of 80 mass% or more, more preferably 85 mass% to 99 mass%, still more preferably 87 mass% to 99 mass%, and particularly preferably 90 mass% to 99 mass%.

[3-3] Particle size

The water-absorbing resin powder (water-absorbing agent) preferably has a mass average particle diameter d3 (D50) of 200 $\mu$m or more, more preferably 200 $\mu$m to 600 $\mu$m, still more preferably 250 $\mu$m to 550 $\mu$m, and particularly preferably 300 $\mu$m to 500 $\mu$m. The proportion of particles having a particle diameter of less than 150 $\mu$m is preferably 10 mass% or less, more preferably 8 mass% or less, and still more preferably 6 mass% or less. The proportion of water-absorbing resin powders having a particle diameter of more than 850 $\mu$m is preferably 5 mass% or less, more preferably 3 mass% or less, and still more preferably 1 mass% or less. The water-absorbing agent includes particles having a particle diameter of 150 $\mu$m to 850 $\mu$m at a content of preferably 90 mass% or more, more preferably 95 mass% or more, still more preferably 97 mass% or more, and particularly preferably 99 mass% or more. Ideally, the content is 100 mass%. The logarithmic standard deviation ($\sigma\zeta$) of the particle size distribution is preferably 0.20 to 0.50, more preferably 0.25 to 0.40, and still more preferably 0.27 to 0.35.

[3-4] AAP (absorption capacity under load)

The water-absorbing resin powder (water-absorbing agent) preferably has an AAP (absorption capacity under load) of 15 g/g or more, more preferably 20 g/g or more, still more preferably 23 g/g or more, still even more preferably 24 g/g or more, particularly preferably 25 g/g or more, and most preferably 26 g/g or more. The upper limit is not particularly limited, but is preferably 35 g/g or less, and more preferably 30 g/g or less.

A water-absorbing resin powder having an AAP of less than 15 g/g is not suitable as an absorbent body of an absorbent article such as a disposable diaper because when a pressure is applied to the absorbent body, a large amount of returned liquid (sometimes referred to as "Re-Wet") is generated. The AAP can be controlled by, for example, adjusting the particle size or changing the surface-crosslinking agent. As described above, the water-absorbing resin powder obtained by the configuration of the present invention tends to have high AAP (absorption capacity under load) of the resulting water-absorbing resin.

[3-5] Vortex (water absorption speed)

The vortex (water absorption speed) of the water-absorbing resin powder (water-absorbing agent) is, in order of ascending preference, 65 seconds or less, 60 seconds or less, 50 seconds or less, 40 seconds or less, 30 seconds or less, 25 seconds or less, or less than 23 seconds. The lower limit is not particularly limited, but is preferably 5 seconds or more, and more preferably 10 seconds or more.

A water-absorbing resin powder having a vortex set within the above range can absorb a predetermined amount of liquid in a short time. When the water-absorbing resin powder is used in an absorbent body of an absorbent article such as a disposable diaper, the user feels wetting of the skin for a reduced time and thus is less likely to feel discomfort, and in addition, the amount of leaking liquid can be reduced.

[3 -6] Residual monomer amount (content)

The content of the residual monomer in the water-absorbing resin powder (water-absorbing agent) is preferably 450 ppm or less, more preferably 430 ppm or less, and still more preferably 420 ppm or less. With such a property, low skin irritation can be expected even when the water-absorbing resin powder (water-absorbing agent) is used as a hygienic material. The lower limit value of the residual monomer may be about 1 ppm. The content is determined regarding neutralized acrylic acid as unneutralized acrylic acid regardless of the rate of neutralization.

[4] Use of water-absorbing resin powder (water-absorbing agent)

The water-absorbing resin powder (water-absorbing agent) of the present invention is used for the purpose of water absorption, and is widely used as an absorbent body. Further, it is used as an absorbent article including the absorbent body. In particular, since the water-absorbing agent of the present invention has an excellent water absorption speed and a low residual monomer amount, it is suitably used as an absorbent body (hereinafter, "wearable absorbent body") suitable for, among absorbent articles, a hygiene article for absorbing a body fluid such as urine or blood, which is used by being attached to a body surface of a human or an animal. In addition, the water-absorbing agent of the present invention is suitably used as an absorbent body (hereinafter, "placeable absorbent material") suitable for a hygiene article for absorbing a body fluid such as urine or blood of human or animal, which is disposed and used on a certain object (for example, a floor, a bed sheet, or the like). Examples of the wearable absorbent body include disposable diapers, incontinence pads, and sanitary napkins, and examples of the placeable absorbent body include pet sheets, wet-prevention sheets for nursing care, and portable toilets for emergency. Examples of other absorbent articles include cat sand, drip absorbents, freshness-keeping materials, and dew condensation prevention sheets. Examples of other applications of the water-absorbing resin powder (water-absorbing agent) include soil humectants, sheets for raising seedling, materials for coating seeds, disposable warmers, cooling bandanas, refrigerants, medical waste liquid solidifying agents, residual soil solidifying agents, water loss prevention waste liquid gelling agents, water-absorbing soil bags, poultice materials, cosmetic thickeners, water-blocking materials for electric and communication cables, gasket packings, fertilizer slow-releasing agents, various slow-releasing agents (space sterilizing agents, fragrance, and the like), wound protection dressing, building materials for preventing dew condensation, and moisture-removing agent in oil. In addition, the water-absorbing agent of the present invention can also be used as paint, adhesive, anti-blocking agent, light diffusing agent, matting agent, additive for decorative panels, additive for artificial marble, additive for toner, or the like, by being caused to absorb water and be swollen and mixed with a resin or a base material.

As a raw material of the absorbent body, an absorbent material such as a pulp fiber can be used together with the water-absorbing resin powder (water-absorbing agent). In this case, the content (core concentration) of the water-absorbing resin powder (water-absorbing agent) in the absorbent body is preferably 30 mass% to 100 mass%.

In the case of using the absorbent body in an absorbent article, it is possible to suppress skin irritation or rash during use by setting the core concentration in the above range. Furthermore, the absorbent body is excellent in diffusibility of a body fluid and the like such as urine or blood and therefore enables efficient liquid distribution, and thus improvement in the amount of liquid absorbed can be expected.

Examples

The present invention will be described more specifically with reference to the following Experimental Examples, but the present invention is not to be construed as being limited to these descriptions, and experimental examples obtained by appropriately combining the technical means disclosed in Experimental Examples are also included in the scope of the present invention.

The term "water-absorbing resin" described below means a granular dried product obtained through the drying step and a surface-crosslinked granular dried product, or a water-absorbing resin powder and a surface-crosslinked water-absorbing resin powder, and the term "hydrogel" means a crosslinked hydrogel polymer or a crosslinked particulate hydrogel polymer not having undergone the drying step.

In the electric devices (including devices used to measure physical properties of a water-absorbing resin) used in Experimental Examples, a 200-V or 100-V electric power supply was used at 60 Hz, unless otherwise specified. The physical properties of the water-absorbing resins and the hydrogels described below were measured under the conditions of room temperature (20°C to 25°C) and a relative humidity of 50% RH ± 10%, unless otherwise specified.

For convenience, the expression "1" or "L" may be used to mean "liter", and the expression "wt%" may be used to mean "% by mass" or "% by weight". In the case of measuring a trace component, the expression "N.D. (non detected)" may be used to mean a value below the detection limit.

[Methods of measuring physical properties]

(a) CRC (centrifuge retention capacity) of water-absorbing resin powder

The CRC (centrifuge retention capacity) of the water-absorbing resin powder was measured in accordance with the NWSP 241.0. R2 (15).

(b) Moisture content and solid content of water-absorbing resin powder

The moisture content of the water-absorbing resin powder was measured in accordance with the NWSP 230.0. R2 (15). In the measurement, the mass of the sample was changed to 1.0 g, the drying temperature was changed to 180°C, and the moisture content and the solid content of the water-absorbing resin powder were calculated from the amount lost from drying for 3 hours.

(c) Mass average particle diameter (d3) of water-absorbing resin powder

The mass average particle diameter (d3) of the water-absorbing resin powder was measured in accordance with the methods described in columns 27 and 28 of U.S. Patent No. 7638570.

(d) Rate of polymerization of hydrogel

Into 1000 g of ion-exchanged water at room temperature, 1.00 g of the sampled hydrogel was put (at this point, the polymerization reaction substantially stopped), and the mixture was stirred at 300 rpm for 2 hours and then filtered to remove an insoluble matter. The amount of the monomer extracted into the filtrate obtained by the above operation was measured using a liquid chromatograph. The amount of the monomer was regarded as the residual monomer amount m (g), the rate of polymerization of the hydrogel, C (mass%) was determined in accordance with the following (Formula 3). The rate of polymerization is preferably measured immediately after sampling the hydrogel, and in a case where a long time is required from sampling to measurement, operation of stopping polymerization by forced cooling (for example, contact with dry ice, liquid nitrogen, or ice water) is necessary.

$$C \text{ (mass\%)} = 100 \times \{1 - m/(M \times \alpha/100)\} \cdots \text{(Formula 3)}$$

In (Formula 3), M represents the mass (g) of the hydrogel, and $\alpha$ represents the solid content (mass%) of the hydrogel.

(e) Solid content of hydrogel

The moisture content of the hydrogel was measured in accordance with the NWSP 230.0. R2 (15). In the measurement, the mass of the sample was changed to 2.0 g, the drying temperature was changed to 180°C, and the drying time was changed to 24 hours. Specifically, 2.0 g of the hydrogel was put into an aluminum cup having a bottom surface diameter of 50 mm, and then the total mass of the sample (the hydrogel and the aluminum cup) W1 (g) was accurately weighed. Next, the sample was allowed to stand in an oven set at an atmospheric temperature of 180°C. After a lapse of 24 hours, the sample was taken out from the oven, and the total mass W2 (g) was accurately weighed. When the mass of the hydrogel subjected to the measurement was represented by M (g), the solid content of the hydrogel, $\alpha$ (mass%) was determined in accordance with the following (Formula 4).

$$\alpha \ (mass\%) = 100 - \{(W1 - W2)/M\} \times 100 \cdots (Formula\ 4).$$

(f) Particle size of particulate hydrogel

The mass average particle diameter (D50) of the particulate hydrogel was measured in accordance with the method described in WO 2016/204302.

That is, 20 g of the hydrogel (solid content: $\alpha$ (mass%)) having a temperature of 20 to 25°C was added to 1000 g of a 20 mass% aqueous sodium chloride solution containing 0.08 mass% Emal 20C (surfactant, manufactured by Kao Corporation) (hereinafter, referred to as "Emal aqueous solution") to obtain a dispersion, and the dispersion was stirred with a stirrer chip having a length of 50 mm $\times$ a diameter of 7 mm at 300 rpm for 16 hours (using an approximately 1.14 L cylindrical polypropylene container having a height of 21 cm and a diameter of 8 cm).

After completion of the stirring, the dispersion was put into the central part of JIS standard sieves (inner diameter: 20 cm, mesh opening of sieves: 8 mm/4 mm/2 mm/1 mm/0.60 mm/0.30 mm/0.15 mm/0.075 mm) placed on a turntable. The entire hydrogel was washed out on the sieves using 100 g of an Emal aqueous solution, then 6000 g of an Emal aqueous solution was uniformly poured from above at a height of 30 cm using a shower (with 72 holes, flow rate: 6.0 [L/min]) while the sieves were manually rotated (at 20 rpm) so that the water-pouring range (50 cm$^2$) spread over the entire sieves. This operation was repeated four times to classify the hydrogel. The classified hydrogel on the first-stage sieve was drained for about 2 minutes and then weighed. The hydrogel was classified on the second and subsequent-stage sieves by the similar operation and drained, and then the hydrogel remaining on each sieve was weighed. The sieves were appropriately changed according to the particle diameter of the hydrogel. For example, in a case where the hydrogel had a fine particle diameter and clogging occurred on the sieves with a mesh opening of 0.15 mm or 0.075 mm, JIS standard sieves having a larger diameter (diameter: 30 cm, mesh opening: 0.15 mm and 0.075 mm) were used.

The ratio (mass%) of the hydrogel remaining on each sieve to the entire hydrogel was calculated by the following (Formula 5). The mesh openings of the sieves after draining were determined in accordance with the following (Formula 6), and the particle size distribution of the hydrogel was plotted on a logarithmic probability paper. The particle diameter at which %R on the cumulative sieve of the plot corresponded to 50 mass% was regarded as the mass average particle diameter (D50) of the hydrogel having a solid content of $\alpha$ (mass%).

$$X \ (\%) = (w/W) \times 100 \cdots (Formula\ 5)$$

$$R(\alpha) \ (mm) = (20/W)^{1/3} \times r \cdots (Formula\ 6)$$

Here,

X represents the mass% (%) of the hydrogel remaining on each sieve after classification and draining,
w represents the mass (g) of the hydrogel remaining on each sieve after classification and draining,
W represents the total mass (g) of the hydrogels remaining on the sieves after classification and draining,
R($\alpha$) represents the mesh opening (mm) of the sieve in terms of the hydrogel having a solid content of $\alpha$ (mass%), and
r represents the mesh opening (mm) of the sieve with which the hydrogel swollen in the 20 mass% aqueous sodium chloride solution was classified.

(g) Mass average particle diameter (d1) of particulate hydrogel converted to solid content

In accordance with WO 2016/204302, the particle diameter of the particulate hydrogel converted to a solid content (mass average particle diameter as the particulate hydrogel is converted to a solid content in a dried product) d1 was calculated by the following (Formula 7) from the solid content $\alpha$ (mass%) of the particulate hydrogel determined in the above (e) and the mass average particle diameter (D50) of the hydrogel having a solid content of $\alpha$ (mass%) determined in the above (f).

$$\texttt{SolidD50 (d1) = GelD50} \times (\alpha/100)^{1/3} \cdots \texttt{(Formula 7)}$$

Here,

GelD50 represents the mass average particle diameter ($\mu$m) of the particulate hydrogel having a solid content of $\alpha$ (mass%),
$\alpha$ represents the solid content (mass%) of the particulate hydrogel, and
SolidD50 (d1) represents the mass average particle diameter ($\mu$m) of the hydrogel converted to a solid content.

(h) Vortex (water absorption time) of water-absorbing resin powder

The vortex (water absorption time) of the water-absorbing resin powder was measured in accordance with the following procedure. First, 0.02 parts by mass of Food Blue No. 1 (Brilliant Blue), which is a food additive, was added to 1,000 parts by mass of physiological saline (0.9 mass% aqueous sodium chloride solution) prepared in advance, and then the liquid temperature was adjusted to 30°C.

Subsequently, 50 ml of the physiological saline was measured and put into a 100 ml beaker, and while the physiological saline was stirred using a stirrer chip having a length of 40 mm and a diameter of 8 mm at 600 rpm, 2.0 g of the water-absorbing resin powder was put into the beaker. The time from the starting point at which the water-absorbing resin powder was put into the beaker to the point at which the water-absorbing resin powder absorbed the physiological saline to cover the stirrer chip was measured as the vortex (water absorption time) (unit: second).

(i) AAP (absorption capacity under load) of water-absorbing resin powder

The AAP (absorption capacity under load) of the water-absorbing resin powder was measured in accordance with the NWSP 242.0. R2 (15). In the measurement, the load condition was changed to 4.83 kPa (0.7 psi).

(j) Average retention time

The average retention time (second) of the hydrogel in the gel-crushing device was determined in accordance with the following method.

First, a hydrogel colored in blue was separately prepared by performing polymerization in the same manner as in Example 1 described below except that Blue No. 1 in an amount of 1 mass% (with respect to the monomer solution) was added to the aqueous monomer solution. Next, an uncolored hydrogel was put into the gel-crushing device at a predetermined input speed to stabilize the operation of the gel-crushing device. The hydrogel colored in blue was put into the gel-crushing device instead of the hydrogel for 5 seconds without changing the input speed of the hydrogel, and then the uncolored hydrogel was continuously put into the gel-crushing device at the same speed to continue the gel-crushing. The time of starting input of the blue hydrogel was set to 0 seconds, and the particulate hydrogel discharged from the gel-crushing device was sampled every 5 seconds.

Into a polyethylene zipper bag size A (manufactured by SEISANNIPPONSHA LTD., length: 70 mm, width: 50 mm, thickness: 0.04 mm), 15 g of the sampled hydrogel was put, and then a weight (15 kg) having a square bottom surface of 80 mm in length and width was placed on the bag for 5 seconds to mold the hydrogel into a sheet form. At that time, molding was performed with the air contained in the bag being removed. Subsequently, the b value of the obtained sheet-formed sample was measured using a spectroscopic color-difference meter SZ-$\Sigma$80COLOR MEASURING SYSTEM (manufactured by NIPPON DENSHOKU INDUSTRIES CO., LTD.) under the measurement conditions of reflection measurement/standard white plate No. 1/30$\varphi$ projector pipe. One sample was measured five times, and an average of the measured values was calculated. In each measurement, the weight was placed to adjust the form of the sample. For the hydrogels sampled every 5 seconds, the b value was calculated in the same manner. A hydrogel having a stronger blueness has a smaller b value (less than 0 and having a large absolute value). The time of sampling the hydrogel having the strongest blueness (the smallest b value) was taken as the average retention time (min). In a case where the gel-crushing step was performed a plurality of times, the average retention time was measured every time, and the total of the measured times was taken as the average retention time (min).

(k) Residual monomer amount

The residual monomer amount of the water-absorbing resin was measured in accordance with the NWSP 210.0. R2 (15). Specifically, 1.0 g of the water-absorbing resin was added to 200 ml of a 0.9 mass% aqueous sodium chloride solution, the mixture was stirred at 500 rpm for 1 hour using a stirrer chip having a length of 35 mm and then filtered, and the monomer amount eluted in the filtrate was measured by high performance liquid chromatography. The residual monomer amount is expressed as a mass ratio with respect to the water-absorbing resin (unit: ppm).

(l) Evaluation of coarse gel amount

Particulate hydrogel discharged from the gel-crushing device was sampled after twice the average retention time elapsed after the crosslinked hydrogel polymer had been put into the main body from the input port of the gel-crushing device. The sampled particulate hydrogel of 100 g was added to 5000 g of a 20 mass% aqueous sodium chloride solution containing 0.08 mass% Emal 20C (surfactant, manufactured by Kao Corporation) (hereinafter, referred to as "Emal aqueous solution") to obtain a dispersion, and the dispersion was stirred with a stirrer chip having a length of 50 mm $\times$ a diameter of 7 mm at 500 rpm for 16 hours. After completion of the stirring, the dispersion was put into the central part of JIS standard sieves (inner diameter 20 cm, mesh opening of sieves 16 mm) and the number of hydrogels on the sieves was measured. The case where the number of the particulate hydrogels is 1 or less is represented by O, the case where the number of the particulate hydrogels is 2 or more and 3 or less is represented by $\Delta$, and the case where the number of the particulate hydrogels is 4 or more is represented by $\times$.

[Example 1]

(Step for preparing aqueous monomer solution)

An aqueous monomer solution was prepared that includes 300 parts by mass of acrylic acid, 100 parts by mass of a 48.5 mass% aqueous sodium hydroxide solution, 0.65 parts by mass of polyethylene glycol diacrylate (average n number: 9), 16.4 parts by mass of a 0.1 mass% aqueous trisodium diethylenetriaminepentaacetate solution, and 273.2 parts by mass of deionized water.

Next, while the aqueous monomer solution adjusted to a temperature of 38°C was continuously fed with a quantitative pump, 150.6 parts by mass of a 48.5 mass% aqueous sodium hydroxide solution was further continuously mixed by line mixing. At this time, the liquid temperature of the aqueous monomer solution was raised to 87°C by the heat of neutralization.

(Polymerization step)

Furthermore, the aqueous monomer solution was continuously mixed with 13.2 parts by mass of a 4 mass% aqueous sodium persulfate solution by line mixing, and then continuously supplied to a continuous polymerizer having a planar polymerization belt provided with weirs at both ends so as to have a thickness of 10 mm. Thereafter, polymerization continuously occurred for a polymerization time of 3 minutes to obtain a belt-formed hydrogel (1a). The obtained belt-formed hydrogel (1a) was cut according to the treatment speed and the input interval in the gel-crushing device described below to obtain a strip-formed hydrogel (1b) having a width of several cm. The strip-formed hydrogel (1b) had a rate of polymerization of 98.5 mass% and a solid content of 53 mass%.

(Gel-crushing step)

The strip-formed hydrogel (1b) was crushed using, as a gel-crushing device, a device provided with a main body (barrel) incorporating two rotation axes that rotate in the same direction at the same rotation speed. On each of the rotation axes, a feed screw (FS), a reverse screw (RS), and a flat disk (F), a helical disk (H), and a reverse helical disk (RH) as the crusher were installed in the configuration shown in Fig. 3. The numerals 1 to 4 shown in Fig. 3 represent a phase angle of each disk and with a disk 1 as a reference, 2 indicates a state of being inclined by 45 degrees, 3 indicates a state of being inclined by 90 degrees, and 4 indicates a state of being inclined by 135 degrees in the direction opposite to the rotation direction of the rotation axis. In the configuration shown in Fig. 3, there were one location of the return configuration. Each disk had a diameter of 50 mm. The ratio L/D of the effective length (in-barrel effective length) L of the main body to the maximum diameter D of the disk was 13.5, and the porosity V was 50%. The barrel had a jacket structure, and had a gas supply port for introduction of water vapor through the jacket into the main body.

First, a heat medium was circulated inside the jacket and kept at 105°C. Thereafter, the rotation speed was set to 50 rpm, and the strip-formed hydrogel (1b) heated to 80°C was put into the input port of the gel-crushing device at a speed of 0.25 kg/min (one piece of strip-formed hydrogel (1b) for every 5 seconds). At this time, simultaneously with the hydrogel (1b), a 10 mass% aqueous lauryl dimethylaminoacetic acid betaine solution and water at 90°C were supplied from the input port, and water vapor at 0.6 MPa was further supplied from the gas supply port. The amount of the lauryl dimethylaminoacetic acid betaine supplied in terms of a solid content was 0.08 mass% with respect to the solid content of the strip-formed hydrogel (1b). The amount of the water at 90°C supplied was 14.5 mass% with respect to the solid content of the strip-formed hydrogel (1b). The input amount of the water vapor at 0.6 MPa was 26.1 mass% with respect to the solid content of the strip-formed hydrogel (1b). Table 1 shows the gel-crushing conditions. Tables 2 and 4 show the properties of the particulate hydrogel (1c) taken out from the discharge port of the gel-crushing device.

(Drying step)

The obtained particulate hydrogel (1c) was dried using a hot-gas dryer. This dryer is provided with a basket (size of bottom surface: 30 cm × 20 cm) made of a wire mesh having a mesh opening of 1.2 mm. On the bottom surface of the basket, 500 g of the particulate hydrogel (1c) was spread so as to be substantially uniform, and a hot gas at 190°C was blown from below for 30 minutes to obtain a dried product (1A').

(Pulverizing and classification step)

The dried product (1A') cooled was supplied to a roll mill and pulverized to obtain a water-absorbing resin (1A) having a mass average particle diameter (d2) of 600 $\mu$m.

(Surface crosslinking step)

Next, a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was sprayed to 100 parts by mass of the water-absorbing resin (1A) and mixed. The resulting mixture was heat-treated at 200°C for 30 minutes to obtain a surface-crosslinked water-absorbing resin (1B). This water-absorbing resin (1B) was supplied to a roll mill and pulverized, and components that passed through an 850 $\mu$m sieve and did not pass through a 150 $\mu$m sieve were collected to obtain a water-absorbing resin (1C). Table 3 shows the physical properties of the water-absorbing resin (1C).

[Example 2]

(Step for preparing aqueous monomer solution)

An aqueous monomer solution was prepared in the same manner as in (step for preparing aqueous monomer solution) of Example 1.

(Polymerization step)

A strip-formed hydrogel (2b) was obtained in the same manner as in (polymerization step) of Example 1. The strip-formed hydrogel (2b) had a rate of polymerization of 98.5 mass% and a solid content of 53 mass%.

(Gel-crushing step)

A particulate hydrogel (2c) was obtained in the same manner as in (gel-crushing step) of Example 1 except that the input speed of the strip-formed hydrogel (2b) was changed to 0.45 kg/min (one piece of strip-formed hydrogel (2b) for every 5 seconds), the supply amount of water at 90°C was changed to 13.5 mass% with respect to the solid content of the strip-formed hydrogel (2b), and the input amount of water vapor at 0.6 MPa was changed to 14.5 mass% with respect to the solid content of the strip-formed hydrogel (2b). Table 1 shows the gel-crushing conditions. Tables 2 and 4 show the properties of the particulate hydrogel (2c) taken out from the discharge port of the gel-crushing device.

(Drying step)

A dried product (2A') was obtained in the same manner as in (drying step) of Example 1.

(Pulverizing and classification step)

A water-absorbing resin (2A) having a mass average particle diameter (d2) of 615 μm was obtained in the same manner as in (pulverizing and classification step) of Example 1.

(Surface crosslinking step)

A water-absorbing resin (2C) was obtained in the same manner as in (surface crosslinking step) of Example 1. Table 3 shows the physical properties of the surface-crosslinked water-absorbing resin (2C).

[Example 3]

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 1.07 parts by mass and trisodium diethylenetriaminepentaacetate was changed to pentasodium ethylenediamine tetramethylene phosphonate.

(Polymerization step)

A strip-formed hydrogel (3b) was obtained in the same manner as in Example 1 (polymerization step). The strip-formed hydrogel (3b) had a rate of polymerization of 98.5 mass% and a solid content of 53 mass%.

(Gel-crushing step)

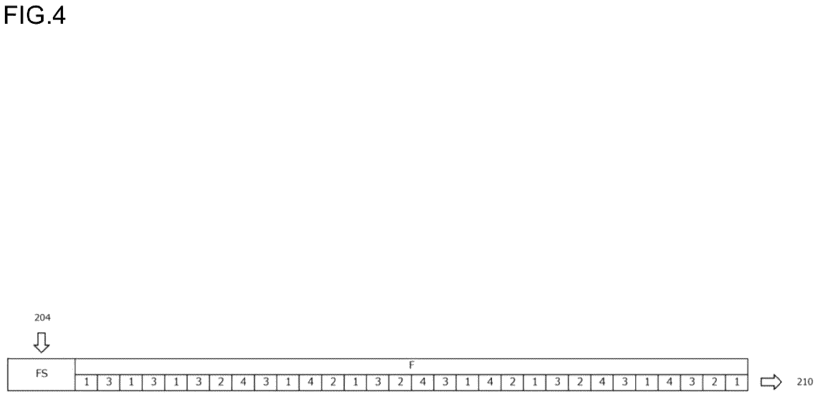

In the gel-crushing device, a feed screw (FS) and flat disks (F) as the crusher were installed on two rotation axes rotating in the same direction in the configuration shown in Fig. 4 (there were 14 locations of return configuration in the configuration shown in Fig. 4), the diameter of each disk was changed to 123 mm, the ratio L/D of the effective length (in-barrel effective length) L of the main body to the maximum diameter D of the disk was changed to 10.2, the temperature of the heat medium of the jacket was changed to 80°C, the rotation speed was changed to 70 rpm, the input speed of the strip-formed hydrogel (3b) was changed to 3.0 kg/min (one piece of strip-formed hydrogel (3b) for every 5 seconds), and the supply amount of lauryldimethylaminoacetic acid betaine was changed to 0.04 mass% with respect to the solid content of the strip-formed hydrogel (3b), the supply amount of water at 90°C was changed to 12.3 mass% with respect to the solid content of the strip-formed hydrogel (3b), the input amount of water vapor at 0.6 MPa was changed to 5.3 mass% with respect to the solid content of the strip-formed hydrogel (3b), and the others were the same as in (gel-crushing step) of Example 1 to obtain a particulate hydrogel (3c). Table 1 shows the gel-crushing conditions. Tables 2 and 4 show the properties of the particulate hydrogel (3c) taken out from the discharge port of the gel-crushing device. As shown in Fig. 4, the discharge port of the gel-crushing device is disposed at the rear side of the device.

(Drying step)

A dried product (3A') was obtained in the same manner as in (drying step) of Example 1.

(Pulverizing and classification step)

A water-absorbing resin (3A) having a mass average particle diameter (d2) of 605 μm was obtained in the same manner as in (pulverizing and classification step) of Example 1.

(Surface crosslinking step)

A water-absorbing resin (3C) was obtained in the same manner as in Example 1 (surface crosslinking step). Table 3 shows the physical properties of the surface-crosslinked water-absorbing resin (3C).

[Example 4]

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 0.85 parts by mass.

(Polymerization step)

A strip-formed hydrogel (4b) was obtained in the same manner as in (polymerization step) of Example 1. The strip-formed hydrogel (4b) had a rate of polymerization of 98.5 mass% and a solid content of 53 mass%.

(Gel-crushing step)

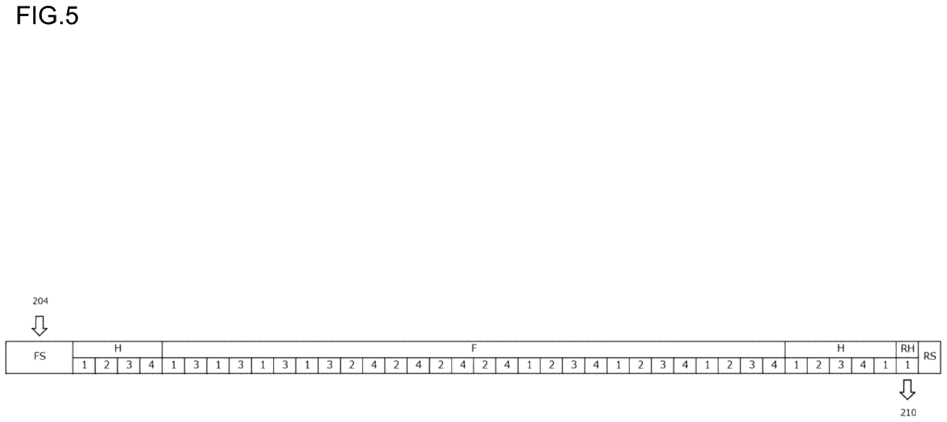

A particulate hydrogel (4c) was obtained in the same manner as in (gel-crushing step) of Example 2 except that the feed screw (FS), and the reverse screw (RS), and the flat disk (F), the helical disk (H), and the reverse helical disk (RH) as the crusher were installed in the configuration shown in Fig. 5 on two rotation axes rotating in the same direction (there were one location of return configuration in the configuration shown in Fig. 5). Table 1 shows the gel-crushing conditions. Tables 2 and 4 show the properties of the particulate hydrogel (4c) taken out from the discharge port of the gel-crushing device.

(Drying step)

A dried product (4A') was obtained in the same manner as in (drying step) of Example 1.

(Pulverizing and classification step)

A water-absorbing resin (4A) having a mass average particle diameter (d2) of 583 $\mu$m was obtained in the same manner as in Example 1 (pulverizing and classification step).

(Surface crosslinking step)

A water-absorbing resin (4C) was obtained in the same manner as in (surface crosslinking step) of Example 1. Table 3 shows the physical properties of the surface-crosslinked water-absorbing resin (4C).

[Example 5]

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 1.07 parts by mass.

(Polymerization step)

A strip-formed hydrogel (5b) was obtained in the same manner as in (polymerization step) of Example 1. The strip-formed hydrogel (5b) had a rate of polymerization of 98.5 mass% and a solid content of 53 mass%.

(Gel-crushing step)

In the gel-crushing device, a feed screw (FS) and flat disks (F) as the crusher were installed on two rotation axes rotating in the same direction in the configuration shown in Fig. 6 (there were five locations of return configuration in the configuration shown in Fig. 6), the diameter of each disk was changed to 53 mm, the ratio L/D of the effective length (in-barrel effective length) L of the main body to the maximum diameter D of the disk was changed to 8.4, the temperature of the heat medium of the jacket was changed to 80°C, the rotation speed was changed to 165 rpm, the input speed of the strip-formed hydrogel (5b) was changed to 1.04 kg/min (one piece of strip-formed hydrogel (5b) for every 5 seconds), and the supply amount of lauryldimethylaminoacetic acid betaine was changed to 0.04 mass% with respect to the solid content of the strip-formed hydrogel (5b), the supply amount of water at 90°C was changed to 26.1 mass% with respect to the solid content of the strip-formed hydrogel (5b), the input amount of water vapor at 0.6 MPa was changed to 5.0 mass% with respect to the solid content of the strip-formed hydrogel (5b), and the others were the same as in (gel-crushing step) of Example 1 to obtain a particulate hydrogel (5c). Table 1 shows the gel-crushing conditions. Tables 2 and 4 show the properties of the particulate hydrogel (5c) taken out from the discharge port of the gel-crushing device. As shown in Fig. 6, the discharge port of the gel-crushing device is disposed at the rear side of the device.

(Drying step)

A dried product (5A') was obtained in the same manner as in Example 1 (drying step).

(Pulverizing and classification step)

A water-absorbing resin (5A) having a mass average particle diameter (d2) of 624 $\mu$m was obtained in the same manner as in Example 1 (pulverizing and classification step).

(Surface crosslinking step)

A water-absorbing resin (5C) was obtained in the same manner as in Example 1 (surface crosslinking step). Table 3 shows the physical properties of the surface-crosslinked water-absorbing resin (5C).

[Example 6]

(Step for preparing aqueous monomer solution)

An aqueous monomer solution was prepared in the same manner as in (step for preparing aqueous monomer solution) of Example 1.

(Polymerization step)

A belt-formed hydrogel (6a) was obtained by performing the same operation as in (polymerization step) of Example 1. The obtained belt-formed hydrogel (6a) was cut to obtain a strip-formed hydrogel (6b) having a width of several cm. Thereafter, the obtained strip-formed hydrogel (6b) was put into a screw extruder, and a further chopping step was performed. As the screw extruder, a meat chopper having an outer diameter of a screw shaft of 86 mm was used, and the meat chopper had a porous plate having a diameter of 100 mm, a thickness of 10 mm, the number of holes of 6, and an aperture ratio of 30% at a tip portion (extrusion port). With the screw shaft rotation speed of the meat chopper set to 115 rpm, the strip-formed hydrogel (6b) was supplied at 4.6 kg/min, and simultaneously, hot water at 80°C was supplied at 4.6 mass% with respect to the solid content of the strip-formed hydrogel (6b), and water vapor at 0.6 MPa was supplied at 4.1 mass% with respect to the solid content of the strip-formed hydrogel (6b) to obtain a chopped hydrogel (6b'). The obtained chopped hydrogel (6b') had a rate of polymerization of 98.9 mass% and a solid content of 51 mass%.

(Gel-crushing step)

A particulate hydrogel (6c) was obtained by performing the same operation as in (gel-crushing step) of Example 2 on the chopped hydrogel (6b'). The chopped hydrogel (6b') was input by 37.5 g for every 5 seconds to be input at 0.45 kg/min. Table 1 shows the gel-crushing conditions. Tables 2 and 4 show the properties of the particulate hydrogel (6c) taken out from the discharge port of the gel-crushing device.

(Drying step)

A dried product (6A') was obtained in the same manner as in (drying step) of Example 1.

(Pulverizing and classification step)

A water-absorbing resin (6A) having a mass average particle diameter (d2) of 605 $\mu$m was obtained in the same manner as in (pulverizing and classification step) of Example 1.

(Surface crosslinking step)

A water-absorbing resin (6C) was obtained in the same manner as in (surface crosslinking step) of Example 1. Table 3 shows the physical properties of the surface-crosslinked water-absorbing resin (6C).

[Example 7]

(Step for preparing aqueous monomer solution)

An aqueous monomer solution was prepared in the same manner as in (step for preparing aqueous monomer solution) of Example 3.

(Polymerization step)

A belt-formed hydrogel (7a) was obtained by performing the same operation as in (polymerization step) of Example 1. The obtained belt-formed hydrogel (7a) was cut to obtain a strip-formed hydrogel (7b) having a width of several cm. Thereafter, the obtained strip-formed hydrogel (7b) was put into a screw extruder, and a further chopping step was performed. As the screw extruder, a meat chopper having an outer diameter of a screw shaft of 86 mm was used, and the meat chopper had a porous plate having a diameter of 100 mm, a thickness of 10 mm, the number of holes of 15, and an aperture ratio of 29% at a tip portion (extrusion port). With the screw shaft rotation speed of the meat chopper set to 115 rpm, the strip-formed hydrogel (7b) was supplied at 4.6 kg/min, and simultaneously, hot water at 80°C was supplied at 4.6 mass% with respect to the solid content of the strip-formed hydrogel (7b), and water vapor at 0.6 MPa was supplied at 4.1 mass% with respect to the solid content of the strip-formed hydrogel (7b) to obtain a chopped hydrogel (7b'). The chopped hydrogel (7b') had a rate of polymerization of 99.0 mass% and a solid content of 51 mass%.

(Gel-crushing step)

A particulate hydrogel (7c) was obtained by performing the same operation as in (gel-crushing step) of Example 3 on the chopped hydrogel (7b'). The chopped hydrogel (7b') was input by 0.25 kg for every 5 seconds to be input at 3.0 kg/min. Table 1 shows the gel-crushing conditions. Tables 2 and 4 show the properties of the particulate hydrogel (7c) taken out from the discharge port of the gel-crushing device. As shown in Fig. 4, the discharge port of the gel-crushing device is disposed at the rear side of the device.

(Drying step)

A dried product (7A') was obtained in the same manner as in (drying step) of Example 1.

(Pulverizing and classification step of dried product)

A water-absorbing resin (7A) having a mass average particle diameter (d2) of 610 $\mu$m was obtained in the same manner as in (pulverizing and classification step) of Example 1.

(Surface crosslinking step)

A water-absorbing resin (7C) was obtained in the same manner as in (surface crosslinking step) of Example 1. Table 3 shows the physical properties of the surface-crosslinked water-absorbing resin (7C).

[Example 8]

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 0.61 parts by mass.

(Polymerization step)

A belt-formed hydrogel (8a) was obtained by performing the same operation as in Example 1 (polymerization step). The obtained belt-formed hydrogel (8a) was cut to obtain a strip-formed hydrogel (8b) having a width of several cm. Thereafter, the obtained strip-formed hydrogel (8b) was put into a screw extruder, and a further chopping step was performed. As the screw extruder, a meat chopper having an outer diameter of a screw shaft of 86 mm was used, and the meat chopper had a porous plate having a diameter of 100 mm, a thickness of 10 mm, the number of holes of 18, and an aperture ratio of 29% at a tip portion (extrusion port). With the screw shaft rotation speed of the meat chopper set to 115 rpm, the strip-formed hydrogel (8b) was supplied at 4.6 kg/min, and simultaneously, hot water at 80°C at 4.6 mass% with respect to the solid content of the strip-formed hydrogel (8b), and water vapor at 0.6 MPa at 4.1 mass% with respect to the solid content of the strip-formed hydrogel (8b) were supplied to obtain a chopped hydrogel (8b'). The obtained chopped hydrogel (8b') had a rate of polymerization of 99.0 mass% and a solid content of 51.1 mass%.

(Gel-crushing step)

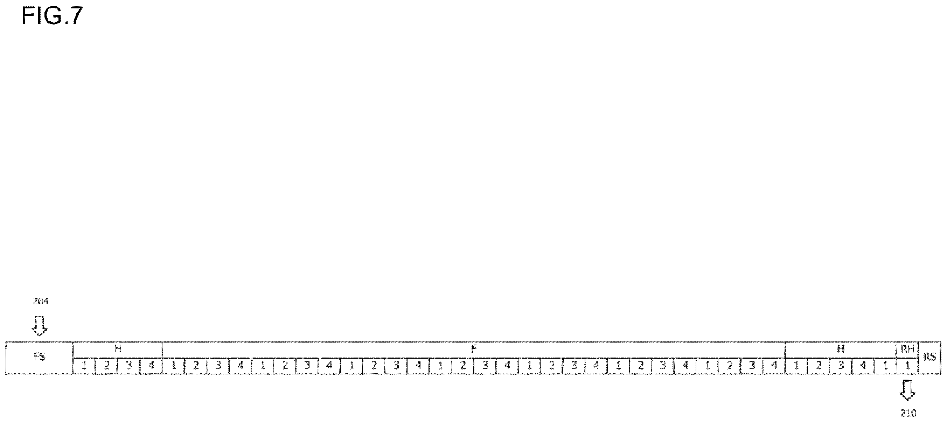

A particulate hydrogel (8c) was obtained in the same manner as in (gel-crushing step) of Example 1, except that the feed screw (FS) and the reverse screw (RS), and the flat disk (F), the helical disk (H), and the reverse helical disk (RH) as the crusher were installed on the two rotation axes rotating in the same direction in the configuration shown in Fig. 7 (there was zero location of return configuration in the configuration shown in Fig. 7), the temperature of the heat medium of the jacket was changed to 80°C, the rotation speed was changed to 40 rpm, the input speed of the chopped hydrogel (8b') heated to 70°C was changed to 0.64 kg/min (53.33 g for every 5 seconds), the supply amount of water at 90°C was changed to 13.5 mass% with respect to the solid content of the chopped hydrogel (8b'), and the input amount of water vapor at 0.6 MPa was changed to 14.5 mass% with respect to the solid content of the chopped hydrogel (8b'). Table 1 shows the gel-crushing conditions. Tables 2 and 4 show the properties of the particulate hydrogel (8c) taken out from the discharge port of the gel-crushing device.

(Drying step)

A dried product (8A') was obtained in the same manner as in (drying step) of Example 1.

(Pulverizing and classification step)

A water-absorbing resin (8A) having a mass average particle diameter (d2) of 605 $\mu$m was obtained in the same manner as in (pulverizing and classification step) of Example 1.

(Surface crosslinking step)

A water-absorbing resin (8C) was obtained in the same manner as in (surface crosslinking step) of Example 1. Table 3 shows the physical properties of the surface-crosslinked water-absorbing resin (8C).

[Comparative Example 1]

In Comparative Example 1, a surface-crosslinked water-absorbing resin (9C) was obtained in the same manner as in Experimental Example 3 disclosed in PCT/JP2021/034800. Specifically, the following describes the details.

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 0.61 parts by mass.

(Polymerization step)

A strip-formed hydrogel (9b) was obtained in the same manner as in (polymerization step) of Example 1.

(Gel-crushing step)

A particulate hydrogel (9c) was obtained in the same manner as in (gel-crushing step) of Example 1, except that the feed screw (FS) and the reverse screw (RS), and the flat disk (F), the helical disk (H), and the reverse helical disk (RH) as the crusher were installed on the two rotation axes rotating in the same direction in the configuration shown in Fig. 5, the rotation speed was changed to 100 rpm, the input speed of the strip-formed hydrogel (9b) was changed to 0.64 kg/min (one piece of strip-formed hydrogel (9b) for every 2.5 seconds), the supply amount of water at 90°C was changed to 11.8 mass% with respect to the solid content of the strip-formed hydrogel (9b), and the input amount of water vapor at 0.6 MPa was changed to 9.7 mass% with respect to the solid content of the strip-formed hydrogel (9b). Table 1 shows the gel-crushing conditions. Tables 2 and 4 show the properties of the particulate hydrogel (9c) taken out from the discharge port of the gel-crushing device.

(Drying step)

A dried product (9A') was obtained in the same manner as in (drying step) of Example 1.

(Pulverizing and classification step)

The dried product (9A') cooled was supplied to a roll mill and pulverized using JIS standard sieves having mesh openings of 850 μm and 150 μm. Components that passed through the 850 μm sieve and did not pass through the 150 μm sieve were collected to obtain a water-absorbing resin (9A").

(Surface crosslinking step)

Next, a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was sprayed to 100 parts by mass of the water-absorbing resin (9A") and mixed. The resulting mixture was heat-treated at 200°C for 30 minutes to obtain a surface-crosslinked water-absorbing resin (9C). Table 3 shows the physical properties of the surface-crosslinked water-absorbing resin (9C).

[Comparative Example 2]

In Comparative Example 2, a surface-crosslinked water-absorbing resin (10C) was obtained in the same manner as in Experimental Example 4 disclosed in PCT/JP2021/034800. Specifically, the following describes the details.

(Step for preparing aqueous monomer solution)

An aqueous monomer solution was prepared in the same manner as in (step for preparing aqueous monomer solution) of Example 1 except that the amount of polyethylene glycol diacrylate (average n number: 9) was changed to 0.61 parts by mass.

(Polymerization step)

A strip-formed hydrogel (10b) was obtained in the same manner as in Example 1 (polymerization step).

(Gel-crushing step)

A particulate hydrogel (10c) was obtained in the same manner as in (gel-crushing step) of Example 1, except that the feed screw (FS) and the reverse screw (RS), and the flat disk (F), the helical disk (H), and the reverse helical disk (RH) as the crusher were installed on the two rotation axes rotating in the same direction in the configuration shown in Fig. 7 (there was zero location of return configuration in the configuration shown in Fig. 7), the temperature of the heat medium of the jacket was changed to 80°C, the rotation speed was changed to 40 rpm, the input speed of the strip-formed hydrogel (10b) heated to 70°C was change to 0.64 kg/min (one piece of strip-formed hydrogel (10b) for every 2.5 seconds), and no water or water vapor was supplied. Table 1 shows the gel-crushing conditions. Table 2 shows the properties of the particulate hydrogel (10c) taken out from the discharge port of the gel-crushing device.

(Drying step)

A dried product (10A') was obtained in the same manner as in (drying step) of Example 1.

(Pulverizing and classification step)

A water-absorbing resin (10A'') was obtained in the same manner as in Comparative Example 1 (pulverizing and classification step).

(Surface crosslinking step)

A surface-crosslinked water-absorbing resin (10C) was obtained in the same manner as in (surface crosslinking step) of Comparative Example 1. Table 3 shows the physical properties of the surface-crosslinked water-absorbing resin (10C).

[Comparative Example 3]

(Step for preparing aqueous monomer solution)

An aqueous monomer solution was prepared in the same manner as in (step for preparing aqueous monomer solution) of Example 3.

(Polymerization step)

A strip-formed hydrogel (11b) was obtained in the same manner as in (polymerization step) of Example 1.

(Gel-crushing step)

A particulate hydrogel (11c) was obtained in the same manner as in (gel-crushing step) of Example 3 except that the feed screw (FS), and the reverse screw (RS), and the flat disk (F), the helical disk (H), and the reverse helical disk (RH) as the crusher were installed in the configuration shown in Fig. 6 on two rotation axes rotating in the same direction and the input speed of the strip-formed hydrogel (11b) was changed to 1.0 kg/min (one piece of strip-formed hydrogel (11b) for every 5 seconds). Table 1 shows the gel-crushing conditions. Tables 2 and 4 show the properties of the particulate hydrogel (11c) taken out from the discharge port of the gel-crushing device.

(Drying step)

A dried product (11A') was obtained in the same manner as in Example 1 (drying step).

(Pulverizing and classification step)

A water-absorbing resin (11A) having a mass average particle diameter (d2) of 608 $\mu$m was obtained in the same manner as in (pulverizing and classification step) of Example 1.

(Surface crosslinking step)

A water-absorbing resin (11C) was obtained in the same manner as in (surface crosslinking step) of Example 1. Table 3 shows the physical properties of the surface-crosslinked water-absorbing resin (11C).

[Table 1]

| (Table 1) Gel-crushing conditions | | | | | | | | | | |
|---|---|---|---|---|---|---|---|---|---|---|
| | Disk thickness T mm | Effective length L inside main body mm | Maximum diameter D mm | L/D | Y/X - | T/X - | Porosity V % | Average retention time [sec] | GGE [J/g] | Gel grinding coefficient [J/g·sec] |
| Example 1 | 13.8 | 674 | 50 | 13.5 | 0.54 | 0.26 | 50 | 102 | 97 | 1.0 |
| Example 2 | 13.8 | 674 | 50 | 13.5 | 0.54 | 0.26 | 50 | 57 | 60 | 1.1 |
| Example 3 | 25 | 1250 | 123 | 10.2 | 0.46 | 0.19 | 57 | 257 | 26 | 0.10 |
| Example 4 | 13.8 | 674 | 50 | 13.5 | 0.54 | 0.26 | 50 | 75 | 84 | 1.1 |
| Example 5 | 10.6 | 445 | 53 | 8.4 | 0.46 | 0.19 | 57 | 51 | 150 | 2.9 |
| Example 6 | 13.8 | 674 | 50 | 13.5 | 0.54 | 0.26 | 50 | 65 | 62 | 1.0 |
| Example 7 | 25.0 | 1250 | 123 | 10.2 | 0.46 | 0.19 | 57 | 260 | 27 | 0.10 |

(continued)

| (Table 1) Gel-crushing conditions | | | | | | | | | | |
|---|---|---|---|---|---|---|---|---|---|---|
| | Disk thickness T mm | Effective length L inside main body mm | Maximum diameter D mm | L/D | Y/X - | T/X - | Porosity V % | Average retention time [sec] | GGE [J/g] | Gel grinding coefficient [J/g·sec] |
| Example 8 | 13.8 | 674 | 50 | 13.5 | 0.54 | 0.26 | 50 | 48 | 56 | 1.2 |
| Comparative Example 1 | 13.8 | 674 | 50 | 13.5 | 0.54 | 0.26 | 50 | 32 | 125 | 3.9 |
| Comparative Example 2 | 13.8 | 674 | 50 | 13.5 | 0.54 | 0.26 | 50 | 19 | 54 | 2.8 |
| Comparative Example 3 | 25 | 1250 | 123 | 10.2 | 0.46 | 0.19 | 57 | 700 | 12 | 0.017 |

[Table 2]

| (Table 2) The properties of particulate hydrogel | | | |
|---|---|---|---|
| | Particulate hydrogel | Properties of particulate hydrogel | |
| | | Solid content [wt%] | d1 [μm] |
| Example 1 | 1c | 43.1 | 115 |
| Example 2 | 2c | 45.0 | 170 |
| Example 3 | 3c | 44.3 | 330 |
| Example 4 | 4c | 47.7 | 112 |
| Example 5 | 5c | 44.6 | 78 |
| Example 6 | 6c | 44.2 | 135 |
| Example 7 | 7c | 43.6 | 213 |
| Example 8 | 8c | 44.9 | 356 |
| Comparative Example 1 | 9c | 49.7 | 141 |
| Comparative Example 2 | 10c | 49.8 | 597 |
| Comparative Example 3 | 11c | 46.1 | 650 |

[Table 3]

| (Table 3) The physical properties of water-absorbing resin | | | | | | | | |
|---|---|---|---|---|---|---|---|---|
| | Particulate hydrogel | Type | Physical properties of water-absorbing resin | | | | | |
| | | | d3 [μm] | Solid content [wt%] | CRC [g/g] | AAP [g/g] | Vortex [sec] | Residual monomer [ppm] |
| Example 1 | 1c | 1C | 355 | 98.6 | 35 | 28 | 21 | 318 |
| Example 2 | 2c | 2C | 356 | 98.2 | 36 | 28 | 19 | 409 |
| Example 3 | 3c | 3C | 340 | 97.0 | 36 | 27 | 20 | 256 |
| Example 4 | 4c | 4C | 350 | 98.9 | 35 | 26 | 18 | 334 |
| Example 5 | 5c | 5C | 348 | 98.0 | 35 | 26 | 19 | 410 |
| Example 6 | 6c | 6C | 348 | 97.9 | 36 | 27 | 18 | 395 |
| Example 7 | 7c | 7C | 359 | 98.1 | 35 | 27 | 19 | 221 |
| Example 8 | 8c | 8C | 348 | 97.8 | 36 | 26 | 20 | 403 |

(continued)

| (Table 3) The physical properties of water-absorbing resin | | | | | | | | |
|---|---|---|---|---|---|---|---|---|
| | Particulate hydrogel | Physical properties of water-absorbing resin | | | | | | |
| | | Type | d3 [μm] | Solid content [wt%] | CRC [g/g] | AAP [g/g] | Vortex [sec] | Residual monomer [ppm] |
| Comparative Example 1 | 9c | 9C | 349 | 97.7 | 33 | 25 | 23 | 451 |
| Comparative Example 2 | 10c | 10C | 351 | 97.8 | 35 | 24 | 43 | 602 |
| Comparative Example 3 | 11c | 11C | 346 | 98.1 | 35 | 23 | 40 | 550 |

[Table 4]

(Table 4)

| | Return configuration [Number of locations] | Evaluation of coarse gel amount |
|---|---|---|
| Example 1 | 1 | ○ |
| Example 2 | 1 | ○ |
| Example 3 | 14 | ○ |
| Example 4 | 1 | ○ |
| Example 5 | 5 | ○ |
| Example 6 | 1 | ○ |
| Example 7 | 14 | ○ |
| Example 8 | 0 | Δ |
| Comparative Example 1 | 1 | ○ |
| Comparative Example 2 | 0 | × |
| Comparative Example 3 | 5 | ○ |

As shown above, the water-absorbing resins of Examples had a high water absorption speed and low residual monomer amount. On the other hand, as compared with the water-absorbing resins of Comparative Examples, the water-absorbing resin of Comparative Example 1 crushed with a gel-crushing coefficient of more than 3.0 J/g·sec had a larger amount of residual monomers as compared with that of Examples. And the water-absorbing resin of Comparative Example 2 and Comparative Example 3 had a slower water absorption speed and a larger amount of residual monomers as compared with those of Examples, because the water-absorbing resin of Comparative Example 2 had a mass average particle diameter of more than 500 μm of the crosslinked particulate hydrogel polymer converted to a solid content and the water-absorbing resin of Comparative Example 3 was crushed with a gel-crushing coefficient of less than 0.020 J/g·sec.

The present application is based on the Japanese patent application No. 2022-056292 filed on March 30, 2022 and the Japanese patent application No. 2022-124526 filed on August 4, 2022. The disclosed contents thereof are referred to and incorporated here as a whole.

Industrial Applicability

The water-absorbing resin powder obtained by the present invention is suitable for use in an absorbent body of a hygiene product such as a disposable diaper.

Reference Signs List

10    Flat disk

| 11 | Hole |
|---|---|
| 12 | Flat portion |
| 200 | Gel-crusher |
| 204 | Input port |
| 206 | Rotation axis |
| 208 | Main body (barrel) |
| 210 | Discharge port |
| 212 | Crusher |
| 214 | Drive device |
| 216 | Gas supply port |
| 218 | Screw |

**Claims**

1. A method for producing a water-absorbing resin powder, the method comprising:

   a polymerization step of polymerizing an aqueous monomer solution to obtain a crosslinked hydrogel polymer; and
   a gel-crushing step of crushing the crosslinked hydrogel polymer after the polymerization step using a gel-crushing device to obtain a crosslinked particulate hydrogel polymer, wherein
   the gel-crushing device comprises an input port, a discharge port, and a main body incorporating a plurality of rotation axes, the rotation axes each comprising a crusher,
   in the gel-crushing step, the crosslinked hydrogel polymer is continuously put into the input port and the crosslinked particulate hydrogel polymer is continuously taken out from the discharge port,
   the crosslinked hydrogel polymer to be put into the input port has a rate of polymerization of 90 mass% or more, a gel-crushing coefficient is 0.020 J/g·sec or more and 3.0 J/g·sec or less, and
   the crosslinked particulate hydrogel polymer discharged from the discharge port has a mass average particle diameter of 500 $\mu$m or less as converted to a solid content.

2. The method according to claim 1, wherein an average retention time of the crosslinked hydrogel polymer in the gel-crushing device is 30 seconds or more and 1200 seconds or less.

3. The method according to claim 1 or 2, wherein the crosslinked hydrogel polymer obtained after the polymerization step has a sheet form, and the method further comprises a chopping step of chopping the crosslinked hydrogel polymer having the sheet form before the gel-crushing step.

4. The method according to any one of claims 1 to 3, wherein the crosslinked particulate hydrogel polymer contains a gel-fluidizing agent.

5. The method according to claim 4, wherein the gel-fluidizing agent is added to the crosslinked hydrogel polymer before and/or during the gel-crushing step.

6. The method according to any one of claims 1 to 5, wherein the rotation axes comprise a disk, and a ratio L/D of an effective length L inside the main body to a maximum diameter D (when a plurality of disks having different diameters are used, a diameter of a largest disk) of the disk is 5 or more and 20 or less.

7. The method according to claim 6, wherein with respect to a major axis diameter X of the disk, a minor axis diameter Y of the disk satisfies $0.2 \leq Y/X \leq 0.6$, and a thickness T of the disk satisfies $0.05 \leq T/X \leq 1.0$.

8. The method according to any one of claims 1 to 7, wherein the gel-crushing device has a porosity V of 40% or more and 80% or less, the porosity V being calculated by a following formula:

$$V = \{(A-B)/A\}*100$$

where A is an internal volume (m³) of a main body portion excluding a portion corresponding to the input port and a portion corresponding to the discharge port from the main body in a length direction, and B is a total volume (m³) of the plurality of rotation axes and the crusher existing in the main body portion excluding the portion corresponding to the input port and the portion corresponding to the discharge port from the main body in the length direction.

9.  The method according to any one of claims 1 to 8, wherein an arrangement of the crusher of the gel-crushing device comprises one or more locations of return configuration at which disks adjacent in a traveling direction from the input port to the discharge port have a phase difference of more than 90° and less than 180°.

10. The method according to any one of claims 1 to 9, wherein the crosslinked hydrogel polymer to be put into the input port has a solid content of 25 to 75 mass%.

11. The method according to any one of claims 1 to 10, wherein the crosslinked particulate hydrogel polymer discharged from the discharge port has a solid content of 25 to 75 mass%.

12. The method according to any one of claims 1 to 11, wherein the crosslinked hydrogel polymer is a crosslinked polymer containing poly(meth)acrylic acid (salt) as a main component.

13. The method according to any one of claims 1 to 12, further comprising a surface crosslinking step after the gel-crushing step.

FIG.1

FIG.2

FIG.3

204 ⇨

| FS | H | | | | F | | | | | | | | | | | | | | | | | | | | | | | | | | | | | | | | | H | | | | RH |
|----|---|---|---|---|---|---|---|---|---|---|---|---|---|---|---|---|---|---|---|---|---|---|---|---|---|---|---|---|---|---|---|---|---|---|---|---|---|---|---|---|---|---|
| | 1 | 2 | 3 | 4 | 1 | 3 | 1 | 3 | 1 | 3 | 1 | 3 | 1 | 3 | 2 | 4 | 2 | 4 | 2 | 4 | 2 | 4 | 1 | 2 | 3 | 4 | 1 | 2 | 3 | 4 | 1 | 2 | 3 | 4 | 1 | 2 | 3 | 4 | 1 | RS |

⇨ 210

FIG.4

# FIG.5

EP 4 501 977 A1

204

| FS | H | | | | F | | | | | | | | | | | | | | | | | | | | | | | | | | | H | | | | RH | RS |
|---|---|---|---|---|---|---|---|---|---|---|---|---|---|---|---|---|---|---|---|---|---|---|---|---|---|---|---|---|---|---|---|---|---|---|---|---|---|
| | 1 | 2 | 3 | 4 | 1 | 3 | 1 | 3 | 1 | 3 | 1 | 3 | 2 | 4 | 2 | 4 | 2 | 4 | 2 | 4 | 1 | 2 | 3 | 4 | 1 | 2 | 3 | 4 | 1 | 2 | 3 | 4 | 1 | 2 | 3 | 4 | 1 | 1 | |

210

FIG.6

# FIG.7

FIG.8

## INTERNATIONAL SEARCH REPORT

| International application No. |
| --- |
| **PCT/JP2023/012467** |

### A. CLASSIFICATION OF SUBJECT MATTER

*C08F 20/06*(2006.01)i; *C08J 3/12*(2006.01)i; *C08J 3/24*(2006.01)i
FI: C08J3/12 A CEZ; C08F20/06; C08J3/24 Z CER

According to International Patent Classification (IPC) or to both national classification and IPC

### B. FIELDS SEARCHED

Minimum documentation searched (classification system followed by classification symbols)

C08F20/06; C08J3/12; C08J3/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2011/126079 A1 (NIPPON SHOKUBAI CO., LTD.) 13 October 2011 (2011-10-13) claims, paragraphs [0091], [0097], [0098], [0109]-[0112], [0209]-[0326], examples | 1-3, 8, 10-13 |
| Y | | 4, 5 |
| X | WO 2013/002387 A1 (NIPPON SHOKUBAI CO., LTD.) 03 January 2013 (2013-01-03) claims, paragraphs [0147], [0148], [0158], [0159], [0191]-[0326], examples | 1-3, 8, 10-13 |
| Y | | 4, 5 |
| Y | WO 2018/092864 A1 (NIPPON SHOKUBAI CO., LTD.) 24 May 2018 (2018-05-24) claims, paragraphs [0230]-[0308], examples | 4, 5 |
| A | WO 2015/163508 A1 (SONGWON INDUSTRIAL CO., LTD.) 29 October 2015 (2015-10-29) claims, examples, entire text | 1-13 |
| A | JP 2004-002562 A (NIPPON SHOKUBAI CO., LTD.) 08 January 2004 (2004-01-08) claims, examples, entire text | 1-13 |
| A | JP 11-188727 A (NIPPON SHOKUBAI CO., LTD.) 13 July 1999 (1999-07-13) claims, examples, entire text | 1-13 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 June 2023** | **27 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 501 977 A1

**INTERNATIONAL SEARCH REPORT**

International application No.

**PCT/JP2023/012467**

### C. DOCUMENTS CONSIDERED TO BE RELEVANT

| Category* | Citation of document, with indication, where appropriate, of the relevant passages | Relevant to claim No. |
|---|---|---|
| P, A | WO 2022/065365 A1 (NIPPON SHOKUBAI CO., LTD.) 31 March 2022 (2022-03-31) claims, paragraphs [0096]-[0097], examples | 1-13 |

Form PCT/ISA/210 (second sheet) (January 2015)

53

**INTERNATIONAL SEARCH REPORT**
Information on patent family members

International application No.

**PCT/JP2023/012467**

| Patent document cited in search report | | | Publication date (day/month/year) | Patent family member(s) | | | Publication date (day/month/year) |
|---|---|---|---|---|---|---|---|
| WO | 2011/126079 | A1 | 13 October 2011 | JP | 2015-83693 | A | |
| | | | | US | 2013/0026412 | A1 | |
| | | | | claims, paragraphs [0220], [0227]-[0229], [0241]-[0245], [0400]-[0536], examples | | | |
| | | | | JP | 2014-98172 | A | |
| | | | | US | 2016/0332141 | A1 | |
| | | | | US | 2012/0258851 | A1 | |
| | | | | WO | 2011/078298 | A1 | |
| | | | | EP | 2557095 | A1 | |
| | | | | EP | 3115382 | A1 | |
| | | | | EP | 2518092 | A1 | |
| | | | | CN | 102822209 | A | |
| | | | | KR | 10-2013-0093477 | A | |
| | | | | KR | 10-2018-0112110 | A | |
| | | | | CN | 104212105 | A | |
| | | | | CN | 102712712 | A | |
| | | | | KR | 10-2012-0132475 | A | |
| WO | 2013/002387 | A1 | 03 January 2013 | US | 2014/0193641 | A1 | |
| | | | | claims, paragraphs [0257]-[0259], [0264]-[0267], [0322]-[0477], examples | | | |
| | | | | EP | 2727953 | A1 | |
| | | | | CN | 103619919 | A | |
| | | | | KR | 10-2014-0038998 | A | |
| WO | 2018/092864 | A1 | 24 May 2018 | JP | 2019-52285 | A | |
| | | | | US | 2019/0329219 | A1 | |
| | | | | claims, paragraphs [0353]-[0461], examples | | | |
| | | | | US | 2019/0329220 | A1 | |
| | | | | WO | 2018/092863 | A1 | |
| | | | | EP | 3543280 | A1 | |
| | | | | EP | 3543279 | A1 | |
| | | | | CN | 109996835 | A | |
| | | | | KR | 10-2019-0077541 | A | |
| | | | | CN | 109996833 | A | |
| | | | | KR | 10-2019-0077540 | A | |
| WO | 2015/163508 | A1 | 29 October 2015 | CN | 106232235 | A | |
| | | | | KR | 10-2016-0149235 | A | |
| | | | | EA | 201691535 | A | |
| JP | 2004-002562 | A | 08 January 2004 | (Family: none) | | | |
| JP | 11-188727 | A | 13 July 1999 | US | 6140395 | A | |
| | | | | claims, examples, entire text | | | |
| | | | | EP | 925836 | A1 | |
| WO | 2022/065365 | A1 | 31 March 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57034101 A
- JP 60055002 A
- WO 2001038402 A
- JP H05112654 A
- US 7638570 B
- US 7265190 B
- US 4893999 A
- US 6241928 B
- US 2005215734 A
- US 6987151 B
- US 6710141 B
- JP 2013139124 A
- JP 2013 A
- JP 139124 A
- JP 2005035212 A
- WO 2011126079 A
- US 2013026412 A
- US 2016332141 A
- WO 2015129917 A
- WO 2006100300 A
- WO 2011025012 A
- WO 2011025013 A
- WO 2011111657 A
- WO 2018092863 A
- WO 2018092864 A
- WO 2016204302 A
- JP 2021034800 W
- JP 2022056292 A
- JP 2022 A
- JP 124526 A

**Non-patent literature cited in the description**

- Non-Woven Standard Procedures. 2015